(19) Europäisches Patentamt
European Patent Office
Office européen des brevets

(11) **EP 3 529 056 B1**

(12) **EUROPÄISCHE PATENTSCHRIFT**

(45) Veröffentlichungstag und Bekanntmachung des Hinweises auf die Patenterteilung:
**26.07.2023 Patentblatt 2023/30**

(21) Anmeldenummer: **17791034.6**

(22) Anmeldetag: **20.10.2017**

(51) Internationale Patentklassifikation (IPC):
**B29C 65/36** (2006.01)   **F16L 47/02** (2006.01)
**B29L 23/00** (2006.01)   **B29K 101/12** (2006.01)

(52) Gemeinsame Patentklassifikation (CPC):
**B29C 66/532; B29C 65/364; B29C 65/3648;**
**B29C 65/3668; B29C 65/3676; B29C 66/1122;**
**B29C 66/3034; B29C 66/5221; B29C 66/5229;**
**B29C 66/53241; B29C 66/7311; B29C 66/73921;**
B29C 66/72321; B29L 2023/225

(86) Internationale Anmeldenummer:
**PCT/EP2017/076898**

(87) Internationale Veröffentlichungsnummer:
**WO 2018/073433 (26.04.2018 Gazette 2018/17)**

(54) **THERMISCHES VERBINDEN VON KUNSTSTOFFOBJEKTEN MITTELS AUFHEIZMITTEL MIT GERINGER CURIE-TEMPERATUR**

THERMAL JOINING OF PLASTIC OBJECTS BY MEANS OF HEATING MEANS HAVING LOW CURIE TEMPERATURE

ASSEMBLAGE THERMIQUE D'OBJETS EN MATIÈRE PLASTIQUE AU MOYEN D'UN ÉLÉMENT DE CHAUFFAGE À FAIBLE TEMPÉRATURE DE CURIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.10.2016 DE 102016120043**

(43) Veröffentlichungstag der Anmeldung:
**28.08.2019 Patentblatt 2019/35**

(73) Patentinhaber: **BRUGG Rohrsystem AG**
**5314 Kleindöttingen (CH)**

(72) Erfinder:
• **RAMETSTEINER, Karl**
**4040 Linz (AT)**
• **HUNZIKER, Urs**
**8706 Meilen (CH)**

(74) Vertreter: **Naiu, Radu Mircea et al**
**E. Blum & Co. AG**
**Vorderberg 11**
**CH-8044 Zürich (CH)**

(56) Entgegenhaltungen:
**EP-A1- 2 452 805**   **WO-A1-92/15182**
**DE-A1-102006 059 337**   **FR-A1- 2 748 415**
**JP-A- H1 047 580**   **JP-A- H09 188 859**
**JP-A- S63 308 080**   **US-A- 2 739 829**
**US-A- 5 756 973**

**Beschreibung**

Technisches Gebiet

Die vorliegende Erfindung betrifft das technische Gebiet des thermischen Verbindens zweier Objekte aus Kunststoff mittels Induktionsschweißens. Die vorliegende Erfindung betrifft insbesondere ein Aufheizmittel aus einem ferromagnetischen Material, eine verschweißte Anordnung sowie ein Schweißsystem mit einem solchen Aufheizmittel sowie ein Verfahren zum thermischen Verbinden zweier jeweils ein Kunststoffmaterial aufweisenden Objekte.

Hintergrund der Erfindung

Objekte aus Kunststoff können thermisch miteinander verbunden werden, indem ein elektrisch leitfähiges Material zwischen die beiden zu verbindenden Objekte eingebracht wird und dieses durch ein elektromagnetisches Wechselfeld erhitzt wird, welches von einem speziell ausgebildeten Generator erzeugt wird. Bei dem sog. Induktionsschweißen von Kunststoffobjekten erfolgt eine elektromagnetische Kopplung zwischen einem magnetischen und elektrisch leitfähigen Material und einem Induktionsgenerator im Wesentlichen über ein zeitlich veränderndes Magnetfeld, welches von einer Spule des Induktionsgenerators erzeugt wird.

Das Prinzip des Induktionsschweißens wird insbesondere beim thermischen Verbinden der Enden von zwei Kunststoffrohren mittels einer Kunststoffmuffe verwendet, welche über die beiden zu verschweißenden Enden geschoben wird. Ein magnetisches und elektrisch leitfähiges Aufheizmittel wird dabei zwischen die Kunststoffmuffe und die Mantelfläche von jeweils einem Endabschnitt der beiden zu verbindenden Rohre eingebracht und induktiv erhitzt, so dass die Außenseiten der beiden Endabschnitte sowie die Innenseite der Kunststoffmuffe aufgeschmolzen werden und bei einem nachfolgenden Abkühlen eine dauerhafte Schweißverbindung eingehen.

Induktionsschweißverfahren sind beispielsweise in EP 2 452 805 A1 offenbart.

US 5 756 973 A offenbart ein induktiv erhitzbares Aufheizmittel, welches für ein thermo-plastisches Verschweißen bzw. Heißverkleben von zwei Verbundstrukturen im Bereich der Luftfahrt verwendet werden kann. Das Verschweißen bzw. Heißverkleben erfolgt entlang einer länglichen leicht gekrümmten und nicht geschlossenen Arbeitslinie, welche von einem induktiven Schweißkopf "abgefahren" wird. Das Aufheizmittel weist Drahtstrukturen auf, welche zum Zwecke einer verbesserten mechanischen Verbindung der Verbundstrukturen Widerhaken bzw. Zacken aufweisen. Die Drahtstrukturen können aus einer Ni-Fe Legierung bestehen, welche eine Curie-Temperatur aufweist, so dass bei Erreichen der Curie-Temperatur der Schweißvorgang gestoppt und ein Überhitzen verhindert wird

JP S63 308080 A offenbart ein Verfahren zum thermischen Laminieren zweier Schichtmaterialien, die jeweils ein Harz aufweisen und für die Herstellung von Teppichen verwendet werden können. Das Laminieren erfolgt in einem kontinuierlichen Prozess, bei dem die beiden Schichtmaterialien, welche einer Teppichrückseite bzw. einer Teppichvorderseite zugeordnet sind, von zwei Vorratsrollen abgewickelt werden. Zwischen den beiden Schichtmaterialien wird von einer Vorratsrolle ein schichtartiges Aufheizmaterial abgewickelt, zwischen die beiden Schichtmaterialien gebracht und zusammen mit den beiden Schichtmaterialien über eine Spannrolle in einen induktiven Wechselwirkungsbereich transferiert, in dem eine Spule elektromagnetische Wellen erzeugt. Diese erzeugen in dem an der Spule vorbei transportierten Aufheizmaterial Wirbelströme und heizen dadurch das Aufheizmaterial auf, so dass es zu einem Verschmelzen der beiden Schichtmaterialien kommt. Das schichtartige Aufheizmaterial ist oben und unten mit einer Klebeschicht versehen.

JP H09 188859 A offenbart ein Aufheizhilfsmittel, welches von einem Hochfrequenzgenerator induktiv erhitzbar ist und als eine Wärme erzeugende Schicht bezeichnet wird. Die Wärme erzeugende Schicht wird verwendet zum thermischen Verbinden eines Kunststoffrohres und eines Fitting Bauteils mittels eines Heißklebeprozesses.

US 2739 829 A offenbart ein Verfahren zum Verschweißen zweier Enden von jeweils einem Kunststoffrohr mittels bzw. in einer Kunststoffmuffe. Zwischen der Kunststoffmuffe und einem der beiden Kunststoffrohre wird jeweils ein metallisches Band eingebracht, welches induktiv erhitzbar ist.

FR 2 748 415 A1 offenbart eine Verbindungsstruktur bestehend aus zwei Enden jeweils eines Kunststoffrohres und einer Muffe. An der Innenseite der Muffe befindet sich ein elastisches Aufheizelement, welches sich entlang des gesamten Umfangs der Muffe erstreckt. Das Aufheizelement ist induktiv erhitzbar, wobei die entsprechenden elektromagnetischen Wellen von einer Spulenanordnung erzeugt werden.

WO 92/15182 A1 offenbart ein System sowie ein Verfahren zum induktiven Verschweißen zweier Kunststoffrohre mittels einer Kunststoffmuffe. Eine Spulenanordnung zum Erzeugen der für den induktiven Schweißvorgang erforderlichen elektromagnetischen Wellen umfasst zwei Einzelspulen, die über zwei Stromanschlüsse elektrisch erregbar sind. Jeweils eine der beiden Einzelspulen befindet sich an bzw. in einer schwenkbaren Halbschale einer Vorrichtung. Für einen Schweißvorgang werden die zu verschweißenden Enden der Rohre sowie die entsprechende Kunststoffmuffe in die Vorrichtung eingelegt und zumindest eine der beiden Halbschalen wird so verschwenkt, dass beiden Einzelspulen die Muffe umgeben. Ein induktiv erhitzbares Aufheizmittel ist in der Kunststoffmuffe integriert. Das Aufheizmittel weist ein ferromagnetisches Material auf, welches eine geeignete Curie Temperatur hat, so dass oberhalb einer "induktiv erreichten Temperatur" der induktive Aufheizvorgang beendet wird.

JP H10 47580 A offenbart Heißklebematerial, mit dem zwei Bauteile miteinander verklebt werden können. Das Heißklebematerial weist eine Schicht Schmelzkleber auf, in welche ein induktiv erhitzbares Material eingebettet ist. Auch eine gestapelte Anordnung aus zwei geschichteten solchen Heißklebematerialien kann zum Verkleben der Bauteile verwendet werden.

DE 10 2006 059337 A1 offenbart induktiv erhitzbare Verbindungselemente zum Verbinden von Teilen aus thermoplastischen Materialien. Die Verbindungselemente können Durchbrüche, Vorsprünge und/oder Vertiefungen aufweisen, um die mechanische Festigkeit einer induktiv realisierten Verschweißung der beiden thermoplastischen Materialien zu erhöhen.

Ein technisches Problem beim Induktionsschweißen besteht darin, die Wärmemenge bzw. die thermische Energie, welche über das Aufheizmittel zugeführt wird, so einzustellen, dass zum einen eine stabile thermische Schweißverbindung gewährleistet ist und zum anderen die Formstabilität der miteinander zu verschweißenden Objekte nicht gefährdet ist. Nur so können mittels Induktionsschweißens "gute" Schweißverbindungen erzielt werden.

Der Erfindung liegt die Aufgabe zugrunde das Induktionsschweißen in Hinblick auf "gute" Schweißverbindungen zu verbessern.

Zusammenfassung der Erfindung

Diese Aufgabe wird gelöst durch die Gegenstände der unabhängigen Patentansprüche. Vorteilhafte Ausführungsformen der vorliegenden Erfindung sind in den abhängigen Ansprüchen beschrieben.

Gemäß einem ersten Aspekt der Erfindung wird beschrieben ein Aufheizmittel zum thermischen Verbinden zweier jeweils ein Kunststoffmaterial aufweisenden Objekte, wobei beim Verbinden ein erstes inneres Objekt zumindest teilweise von einem zweiten äußeren Objekt umgeben ist und sich das Aufheizmittel zwischen dem ersten inneren Objekt und dem zweiten äußeren Objekt befindet. Das beschriebene Aufheizmittel weist eine bandartige Struktur auf, in welcher eine Mehrzahl von Öffnungen ausgebildet ist. Die Öffnungen sind derart dimensioniert, dass aufgeschmolzenes Kunststoffmaterial des ersten inneren Objekts und/oder des zweiten äußeren Objekts eindringen und sich mit aufgeschmolzenem Kunststoffmaterial des jeweils anderen Objekts verbinden kann. Alternativ oder in Kombination sind die Öffnungen mit einem Kunststoffmaterial gefüllt, welches sich mit aufgeschmolzenem Kunststoffmaterial des ersten inneren Objekts und/oder des zweiten äußeren Objekts verbinden kann. Die bandartige Struktur weist ein ferromagnetisches Material auf, welches induktiv erhitzbar ist und welches eine Curie-Temperatur hat, die geringer ist als 460°C. Erfindungsgemäß weist das Aufheizmittel ferner eine Haftkraftveränderungsschicht auf, welche an zumindest einer Oberfläche der bandartigen Struktur angebracht oder ausgebildet ist.

Dem beschriebenen Aufheizmittel liegt die Erkenntnis zugrunde, dass durch das Verwenden eines ferromagnetischen Materials mit einer in Bezug zu dem Material der beiden zu verbindenden Objekte geeigneten Curie-Temperatur eine automatische Temperaturbegrenzung bei einem thermischen Verbindungsvorgang gegeben ist. Dies bedeutet, dass bei einer Curie-Temperatur, welche auf der einen Seite ausreichend hoch ist, um das Kunststoffmaterial von zumindest einem der beiden Objekte aufzuschmelzen, und welche auf der anderen Seite nicht so hoch ist, so dass das Kunststoffmaterial auf eine Temperatur gebracht wird, welche zu einer thermischen Zerstörung von zumindest einem der beiden Objekte führt. Eine solche thermische Zerstörung kann beispielsweise dadurch gegeben sein, dass das betreffende Objekt soweit aufschmilzt, dass sich seine Form während des thermischen Verbindungsvorgangs nicht unerheblich verändert. Insbesondere sollte das ferromagnetische Material eine Curie-Temperatur haben, welche, sofern diese Curie-Temperatur bei einem thermischen Verbindungsvorgang auch erreicht wird, innerhalb einer typischen für einen thermischen Verbindungsvorgang benötigten Zeitdauer, lediglich zu einer Aufschmelzung einer Oberflächenschicht von zumindest einem der beiden Objekte führt.

Unter dem Begriff "Material" kann in diesem Dokument sowohl ein "einheitliches" Material mit einer einheitlichen "Curie-Temperatur" als auch ein Materialbestandteil oder mehrere Materialbestandteile einer Zusammensetzung von verschiedenen Materialien verstanden werden. Insbesondere kann sich der Begriff "Material" zumindest auf einen einzelnen Stoff (z.B. zumindest ein Legierungsbestandteil) oder auf eine Materialzusammensetzung (z.B. Legierung) beziehen.

Bevorzugt ist das Aufheizmittel derart ausgebildet, dass es auf beiden Seiten der bandartigen Struktur zu einer Erwärmung des angrenzenden Kunststoffmaterials führt. Dies bedeutet, dass bei einem thermischen Verbinden nicht lediglich ein Objekt an das andere Objekt angeschweißt wird, sondern dass beide Objekte zumindest annähernd symmetrisch miteinander verschweißt werden. Somit können im aufgeheizten Zustand beide Kunststoffmaterialien durch die in der bandartigen Struktur ausgebildeten Öffnungen hindurchfließen oder sich mit bereits in den Öffnungen befindlichem Kunststoffmaterial verbinden, so dass sich eine Mehrzahl von kleinen Schweißverbindungen durch die Öffnungen in der bandartigen Struktur hindurch ausbilden. Dies führt nach einem Abkühlen zu einer besonders hohen Festigkeit der resultierenden thermischen Verbindung.

Es wird darauf hingewiesen, dass die in diesem Dokument beschriebene Aufheizung zum Teil durch magnetische Verluste und zum Teil durch elektrische Verluste bewirkt wird. Unter magnetische Verluste werden in diesem Zusammenhang sog. Ummagnetisierungsverlusten am Aufheizmittel verstanden, welche mit der ferromagnetischen Magnetisierbarkeit des Aufheizmittels zusammenhängen und auch als Hystereseverluste bezeichnet werden können. Die elektrischen Verluste sind insbesondere ohmsche Verluste in Verbindung mit induzierten Strömen, insbesondere Wirbelströmen, die bei der induktiven Wechselwirkung des Aufheizmittels mit einem von einem entsprechenden Generator erzeugten elektromagnetischen Feld erzeugt werden.

Bei Erreichen der Curie-Temperatur des Aufheizmittels fallen die Ummagnetisierungsverluste weg und die Einkopplung von Energie in das Aufheizmittel ist entsprechend reduziert, weil nur noch die elektrischen Verluste zu einer (weiteren) Erwärmung des Aufheizmittels beitragen. Je nach konkreter Ausgestaltung des Aufheizmittels kann dieses Wegfallen des durch Ummagnetisierungsverluste bewirkten Energieeintrags bereits zu einer Temperaturbegrenzung ausreichen. Ggf. kann eine entsprechende Reduktion der Einkopplung von Energie auch von einem Induktionsgenerator erkannt werden, von welchem dann "weniger Leistung entnommen wird". In diesem Zusammenhang kann der Induktionsgenerator als die Primärseite eines ganzen Aufheizsystems angesehen werden, welches aus dem Induktionsgenerator und dem (sekundärseitigen) Aufheizmittel besteht. Ein Erkennen einer reduzierten Leistungsentnahme kann als Signal verwendet werden, den Induktionsgenerator so anzusteuern, dass die induktive Energieübertragung weiter reduziert oder sogar abgeschaltet wird.

Gemäß einem Ausführungsbeispiel der Erfindung hat das ferromagnetische Material eine Curie-Temperatur, die geringer ist als 400°C, insbesondere geringer als 300°C und weiter insbesondere geringer als 250°C. Dies hat den Vorteil, dass auch für Kunststoffobjekte, welche einen vergleichsweise niedrigen Schmelzpunkt haben, auch bei einem längeren induktiven Schweißvorgang und/oder bei einem Schweißvorgang mit hoher induktiver Primärenergie (von einem Generator erzeugt) eine hohe Formstabilität der beiden zu verschweißenden Objekte gewährleistet werden kann.

Eine Curie-Temperatur deutlich über dem Schmelzpunkt der beteiligten Kunststoffe trägt zu einer schnellen Aufheizung beim Schweißprozess bei und verhilft damit zu einer Arbeitszeitverkürzung für den Schweißprozess. Bei einer relativ hohen Curie-Temperatur muss das Aufheizmittel in Bezug auf Wärmeableitung, Wärmekapazität und Aufheizgeschwindigkeit dahingehend optimiert werden, dass die sich im Aufheizmittel schnell akkumulierende Energie derart an den Kunststoff abgeleitet werden kann, dass dieser nicht beschädigt wird. Wie nachfolgend im Detail beschrieben, lässt sich durch die Verwendung von Materialien mit verschiedenen Curie-Temperaturen der makroskopisch in Erscheinung tretende Übergangsbereich des Verlusts der ferromagnetischen Eigenschaften spreizen bzw. verschieben und so die Funktion der Temperaturbegrenzung zusätzlich gestalten

Gemäß einem weiteren Ausführungsbeispiel der Erfindung weist die bandartige Struktur mehrere ferromagnetische Materialien aufweist, welche unterschiedliche Curie-Temperaturen haben. Dies hat den Vorteil, dass durch eine geeignete Mischung der Mengenverhältnisse (Massen- oder Volumenverhältnisse) der unterschiedlichen ferromagnetischen Materialien eine für die jeweilige Anwendung optimale mittlere Curie-Temperatur eingestellt werden kann. Die beschriebenen unterschiedlichen ferromagnetischen Materialien können auch dazu führen, dass dem Aufheizmittel zumindest zwei verschiedene Curie-Temperaturen zugeordnet sind. Dies bedeutet in der Praxis, dass zu Beginn einer Verbindungsvorgangs, wenn die Temperatur des Aufheizmittel und des umgebenden Kunststoffmaterial noch relativ gering ist, beide Materialien zu einem induktiven Heizen mit einer vergleichsweise hohen Heizleistung beitragen. Wenn die Temperatur später einen Wert erreicht, der über der Curie-Temperatur desjenigen Materials liegt, welches die geringere Curie-Temperatur hat, dann wird der Heizvorgang nur noch mit einer vergleichsweise geringen Heizleistung stattfinden. Dies ermöglicht auf vorteilhafte Weise eine besonders genaue Steuerung des thermischen Verbindens der beiden Objekte.

Es wird darauf hingewiesen, dass eine derartige stufenartige Steuerung der Heizleistung im Prinzip mit einer beliebigen Anzahl an ferromagnetischen Materialien mit jeweils unterschiedlichen Curie-Temperaturen realisiert werden kann. In der Praxis sollte es jedoch für viele Anwendungen ausreichend sein, wenn die bandartige Struktur lediglich zwei ferromagnetische Materialien mit unterschiedlichen Curie-Temperaturen aufweist.

Gemäß einem weiteren Ausführungsbeispiel der Erfindung weist die bandartige Struktur einen schichtweisen Aufbau von unterschiedlichen Materialien auf, welche insbesondere eine unterschiedliche Härte, eine unterschiedliche Elastizität und/oder eine unterschiedliche Duktilität aufweisen.

Durch eine geeignete Einstellung der Mengenverhältnisse der unterschiedlichen Materialien ist es somit möglich, die mechanischen Streckeigenschaften des Aufheizmittels so zu modifizieren, dass sich beim Verstecken gezielt Verformungen ergeben, welche zu einer Verbesserung, das heißt zu einer erhöhten mechanischen Festigkeit, der erzeugten Schweißverbindung beitragen. Die Verformungen können insbesondere Höhenunterschiede und/oder Verrundungen am Übergang zwischen der Oberfläche des bandartigen Materials in die Öffnungen sein.

Nach derzeitiger Erkenntnis eignet sich für den beschriebenen schichtweisen Aufbau insbesondere eine Kombination aus zwei oder mehr Schichten der folgenden metallischen Legierungen: Cu-Al, Fe-Cu, Fe-Edelstahl, CU-Sn, Fe-Al, Al-Mg. Um für die jeweilige Anwendung optimale mechanische Streckeigenschaften zu erzielen, ist es auch möglich, innerhalb einer Legierung die Verhältnisse zwischen den an der Legierung beteiligten Metallen anzupassen.

Um den Einfluss verschiedener Elastizitäten auf die Qualität und insbesondere auf die Festigkeit einer Schweißverbindung zu untersuchen, wurden von den Erfindern eine Reihe von Experimenten durchgeführt. Dabei hat sich gezeigt, dass durch gezieltes Einstellen der Längselastizität der bandartigen Struktur eine deutliche Verbesserung des Schweißergebnisses erreicht werden kann. Dabei ist die Längselastizität die Elastizität der bandartigen Struktur entlang ihrer länglichen Erstreckung, welche entlang der Oberfläche zumindest des ersten inneren Objekts wirkt. Bei einem Verschweißen von Rohren ist diese längliche Erstreckung die tangentiale Richtung entlang der zylindrischen Mantelfläche des betreffenden Rohres.

Bei diesen Experimenten hat sich insbesondere ergeben, dass bei zu kleiner Längselastizität, d.h. wenn das Aufheizhilfsmittel zu steif bzw. zu starr ist, das Aufheizmittel nicht über die ganze Verbindungsfläche den nötigen Kontaktdruck aufbauen kann, der für eine systematische und bevorzugt anisotrope Verflüssigung von dem betreffenden Kunststoffmaterial erforderlich ist. Ebenso ist auch bei einer zu großen Längselastizität an keiner Stelle der gewünschte Anpressdruck vorhanden. Es hat sich gezeigt, dass Längselastizitäten von 30 N bis 300 N für eine relative Dehnung von 0,1% und insbesondere von 60 N bis 200 N für eine relative Dehnung von 0,1% zu besonders guten Schweißergebnissen führen. Es wird darauf hingewiesen, dass hier die Längselastizitäten der Federkonstante der bandartigen Struktur entspricht (vgl. Hook'sches Gesetz).

Der Vollständigkeit halber wird darauf hingewiesen, dass der schichtweise Aufbau auch mehrere Schichten von Materialien mit unterschiedlichen Curie-Temperaturen aufweisen kann. Dies hat den Vorteil, dass zum Einstellen von zumindest einer für den speziellen Anwendungsfall geeigneten Curie-Temperatur keine Legierung aus unterschiedlichen Materialien mit verschiedenen Curie-Temperaturen hergestellt werden muss.

Gemäß einem weiteren Ausführungsbeispiel der Erfindung ist die bandartige Struktur konfiguriert, um eine geschlossene bandartige Struktur zu bilden, welche durchgängig elektrisch leitfähig ist.

Anschaulich ausgedrückt entspricht das Aufheizmittel einer Kurzschlusswicklung eines Transformators, die als Sekundärwicklung eine besonders effektive elektromagnetische Kopplung, insbesondere eine besonders effektive induktive Kopplung, mit einer erregenden Primärspule des Transformators eingehen kann. Dabei ist in bekannter Weise die Primärspule, welche eine oder bevorzugt mehrere Windungen aufweist, ein wesentlicher Bestandteil eines Gerätes, mit welchem die beiden Objekte thermisch miteinander verbunden und insbesondere miteinander verschweißt werden können.

Bei der Anwendung des beschriebenen Aufheizmittels für ein thermisches Verbinden der zwei Objekte kann die bandartige Struktur einfach um das innere Objekt herumgewickelt werden, so dass die beiden Enden der bandartigen Struktur überlappen und so ein geschlossenes Band bilden, welches eine Sekundärspule mit einer einzigen Wicklung darstellt.

Für manche Anwendungen, beispielsweise einem Verschweißen von zwei Kunststoffrohren mittels einer die beiden Enden der Kunststoffrohre umgebenden Muffe (hier stellen die beiden Kunststoffrohre das innere Objekt und die Muffe das äußere Objekt dar), kann die bandartige Struktur auch von Anfang an eine geschlossene Struktur sein, welche durch ein einfaches Überstülpen über ein Ende von zumindest einem Kunststoffrohr einfach zwischen die Kunststoffrohre und die Muffe eingebracht wird.

Die erfindungsgemäße Haftveränderungsschicht kann auf vorteilhafte Weise dazu beitragen, dass das Fließverhalten von aufgeschmolzenem Kunststoff, welcher mit dem Aufheizmittel in Kontakt kommt, in Hinblick auf eine nach dem Abkühlen besonders stabile Schweißverbindung eingestellt werden kann. Wenn sich nämlich im Verlauf des thermischen Verbindens bzw. des Verschweißens die Oberfläche der beiden Kunststoffobjekte verflüssigt, dann können Zustände von gefangenen Luftblasen entstehen, falls sich um die jeweilige Erwärmungsstelle herum bereits alle pneumatischen Verbindungen "zur Außenwelt" geschlossen haben. Die dadurch auftretende Druckerhöhung wirkt hilfreich für das Unterschützen der gewünschten Vorzugsfließrichtung des flüssigen Kunststoffes durch das Aufheizmittel hindurch. Dabei ist es von Bedeutung, dass die Benetzung der Oberfläche des Aufheizmittels von optimalen adhäsiven Effekten begleitet wird, so dass der Weg des geringsten Widerstandes des flüssigen Kunststoffes der Weg durch die Öffnungen des Aufheizmittels hindurch ist und Luftblasen nicht im Innern der Öffnungen verbleiben. Dadurch kann verhindert werden, dass der aufgeschmolzene Kunststoff das Aufheizmittel (durch die Öffnungen hindurch) durchdringen kann.

Gemäß einem weiteren Ausführungsbeispiel der Erfindung weist die Haftkraftveränderungsschicht an der Oberfläche der bandartigen Struktur eine Haftkraftverstärkungsschicht auf und/oder die Haftveränderungsschicht weist an den Seitenwänden der Öffnungen eine Haftkraftreduzierungsschicht auf.

Durch eine Haftkraftverstärkung zwischen der Oberfläche der bandartigen Struktur und dem jeweiligen Kunststoffobjekt kann nach einem Abkühlen zusätzlich zu der Schweißverbindung zwischen beiden Kunststoffobjekten auch eine feste Verbindung zwischen der Oberfläche der bandartigen Struktur und dem jeweiligen Kunststoffobjekt hergestellt werden. Dazu sind bevorzugt beide (flächigen) Oberflächen der bandartigen Struktur mit einer Haftkraftverstärkungsschicht versehen.

Durch eine Haftkraftreduzierungsschicht im Bereich der Öffnungen kann das Fließverhalten von verflüssigtem Kunststoff durch die bandartige Struktur hindurch verbessert werden. Dadurch ergibt sich nach dem Abkühlen eine mechanisch besonders stabile direkte Verbindung zwischen beiden Kunststoffobjekten.

Gemäß einem weiteren Ausführungsbeispiel der Erfindung ist die Haftkraftveränderungsschicht eine Oxidschicht. Alternativ oder in Kombination weist die Haftkraftveränderungsschicht Carbonate auf.

Eine Oxidschicht und insbesondere eine Metalloxidschicht kann, so haben es die Erfinder des beschriebenen Aufheizmittels herausgefunden, auch eine (gezielt ausgebildete) Oxidschicht an der Oberfläche der bandartigen Struktur sein. Derartige Oxidschichten können beispielsweise gebildet werden durch eine gezielte Lagerung der bandartigen Struktur in einer Atmosphäre, die wenigstens 10% einer Sauerstoffmodifikation, also naszierender (atomarer) Sauerstoff (O), molekularer Sauerstoff ($O_2$) und/oder Ozon ($O_3$) enthält, und der Rest der Atmosphäre aus einem Inertgas gebildet ist. Das Inertgas kann ein Edelgas, bevorzugt He, Ar, Ne und/oder Stickstoff sein.

Die Metalloxidschicht kann mindestens eines der folgenden Elemente enthalten: Fe, Cr, Ni, allenfalls auch Cu. Al, Zn, Sn sowie Seltene Erden Metalle. Des Weiteren können die Metalloxide speziell an der Oberfläche Anteile von mindestens einem der folgenden Elemente enthalten: Au, Ag, Cu, Rh.

Als besonders wirksam haben sich in diesem Zusammenhang Oberflächenschichten erwiesen, die zusätzlich zu den Metalloxiden auch Carbonate enthalten. Dies kann durch Zusatz von geringen Mengen an $CO_2$ erreicht werden, wobei die geringe Menge an $CO_2$ weniger als 10 Gewichtsprozent (Gew.%) und bevorzugt weniger als 1 Gew% beträgt, um die Bildung der gewünschten Metalloxide nicht zu sehr zugunsten von Carbonaten zu verschieben.

Eine besonders geeignete Schichtzusammensetzung kann beispielsweise bei Temperaturen von 5°C bis 120°C, bevorzugt von 15°C bis 80°C, über einen Zeitraum von wenigstens 48 Stunden, bevorzugt wenigstens 96 Stunden, gebildet werden. Um die Reaktionsdauer des Gemisches aus Sauerstoff, Kohlendioxid und/oder Inertgas deutlich zu verringern, kann die Oberfläche der bandartigen Struktur mit einem atomaren Plasma, welches neben Schutzgas (vorzugsweise Argon) auch die reaktiven Gasbestandteile $O_2$ und $CO_2$ enthält, beaufschlagt werden. Dadurch kann die gewünschte Haftveränderungsschicht innerhalb von wenigen Sekunden oder sogar Sekundenbruchteilen aufgebaut werden. Ferner können auch andere Elemente wie beispielsweise Si, B, Ti und/oder Zr durch Zusatz entsprechender Precursorgase in die Oberfläche der bandartigen Struktur integriert werden. In diesem Zusammenhang hat sich herausgestellt, dass insbesondere Si und Ti zur Herstellung einer besonders geeigneten Haftveränderungsschicht beitragen können. Durch eine geeignete Auswahl der Zusammensetzung der Haftveränderungsschicht können deren gewünschte (Haft)Eigenschaften eingestellt werden.

In manchen Ausführungsbeispielen haben die Oxidschichten eine Schichtdicke von kleiner als 10$\mu$m, insbesondere kleiner als 500nm, vorzugsweise kleiner als 50nm oder idealerweise kleiner als 10nm.

Es wird darauf hingewiesen, dass bei einem schichtweisen Aufbau von Oxiden mit den erwähnten Eigenschaften im Sinne einer Haftungssteuerung insbesondere sehr dünne Schichten von Vorteil sind, weil damit der negative Einfluss der Sprödigkeit von Oxiden minimiert wird und trotzdem die haftungssteuernden Eigenschaften schon voll ausgeprägt sind. Bereits mit Schichtdicken unter 10nm (typsicherweise 1nm bis 5nm) wurden bei experimentellen Untersuchungen sehr gute Ergebnisse erzielt.

Gemäß einem weiteren Ausführungsbeispiel der Erfindung haben die Öffnungen einen mittleren Abstand s voneinander, welcher in Bezug zu einer Dicke d der bandartigen Struktur zumindest eine der folgenden Gleichungen erfüllt: $0,5 < s/d < 2$; $0,7 < s/d < 1,5$; $0,8 < s/d < 1,3$; $0,9 < s/d < 1,1$.

Die beschriebenen Öffnungs- bzw. Lochgeometrien führen, so hat sich in experimentellen Untersuchungen herausgestellt, zu einer qualitativ besonders festen Schweißverbindung. Dabei können die Öffnungen entweder (a) regelmäßig (mit einem festen Versatz zwischen in verschiedenen Richtungen benachbarten Öffnungen) oder (b) unregelmäßig angeordnet sein.

Anschaulich ausgedrückt ist neben der chemischen Oberflächenbeschaffenheit der bandartigen Struktur also auch deren Geometrie maßgeblich für die Qualität einer Schweißung. Die Endfestigkeit einer Schweißverbindung kann bei einer geeigneten Loch- bzw. Öffnungsgeometrie deshalb besonders hoch sein, weil sich nach dem Verfestigen des verflüssigten Kunststoffes keine anisotropen Festigkeitswerte in Bezug auf Scherkräfte zeigen. Auch ein Abschälen von Teilen eines Kunststoffobjekts kann durch die Wahl einer geeigneten Lochgeometrie verhindert werden, wobei ein Abschälen insbesondere ein räumliches Trennen eines Bereiches mit zwischenzeitlich verflüssigten Kunststoff von einem Bereich mit stets festem Kunststoff umfassen kann.

In absoluten Zahlen kann bei bestimmten Ausführungsformen der mittlere Abstand s im Bereich zwischen 0,1mm und 5mm liegen. Gleiches gilt für die Dicke d, welche ebenfalls im Bereich zwischen 0,1mm und 5mm liegen kann.

Gemäß einem weiteren Ausführungsbeispiel der Erfindung ist ein Übergang zwischen der flächigen Oberfläche der bandartigen Struktur und einer Öffnung verrundet. Dadurch können auf vorteilhafte Weise "scharfe Wegänderungen" bzw. abrupte Richtungsänderungen des flüssigen Kunststoffs auf seinen Weg in die betreffende Öffnung hinein vermieden werden. Dies kann zu einer signifikanten Verbesserung der Fließverhaltens führen.

Unter dem Begriff "Verrundung" kann in diesem Zusammenhang insbesondere verstanden werden, dass der Übergang von der flächigen Oberfläche der bandartigen Struktur in die betreffende Öffnung frei von Ecken und Kanten ist. Die Verrundung muss also nicht zwingend einen Radius eines gedachten Kreises haben.

Im Falle von zylindrischen Öffnungen ist der Übergang bei einer Draufsicht auf die bandartige Struktur ein Kreis bzw. ein Kreisring. Dabei hängt die Breite des Rings von dem Ausmaß der Verrundung ab. Eine besonders einfache Verrundung kann mit einem Senken realisiert werden, welches beispielsweise mittels eines Senkkopfbohrers durchgeführt wird. Dabei erhält der Bereich der Verrundung die Form eines Kegelstumpfes.

Bei manchen Ausführungsbeispielen hat die Verrundung einen Radius von mehr als 10 μm, insbesondere mehr als 70 μm und weiter insbesondere mehr als 300 μm.

Gemäß einem weiteren Ausführungsbeispiel der Erfindung weisen zumindest einige der Öffnungen jeweils eine Längsachse auf, welche mit einer Flächennormale der Oberfläche der bandartigen Struktur einen Winkel von ungleich Null bilden.

Anschaulich ausgedrückt sind zumindest einige der in der bandartigen Struktur ausgebildeten Öffnungen schräge Öffnungen. Diese führen dazu, dass in einer Fließrichtung die Richtungsänderung des flüssigen Kunststoffes auf seinem Weg in die Öffnung hinein vergleichsweise klein ist (insbesondere kleiner als 90°). Auch wenn in der entgegengesetzten Fließrichtung die Richtungsänderung des flüssigen Kunststoffes auf seinem Weg in die Öffnung hinein größer ist (insbesondere größer als 90°), kann eine solche Anisotropie zu einem insgesamt verbesserten Fließverhalten führen. Die Längsachsen verschiedener Öffnungen können auch unterschiedlich sein, wobei in Bereichen mit unterschiedlichen zu erwartenden Fließrichtungen die Längsachsen der betreffenden Öffnungen bevorzugt jeweils gegen die Fließrichtung geneigt sind.

Ferner hat sich gezeigt, dass bei schrägen Öffnungen die mechanische Festigkeit der miteinander verschweißten Kunststoffobjekte erhöht sein kann. Insbesondere bei unterschiedlichen Richtungen bzw. Orientierungen der Öffnungen findet beim Abkühlen und dem damit verbundenen Erstarren eine Verspannung mit der bandartigen Struktur statt. Diese kann nach dem Prinzip von "Spannbeton" die Gesamtfestigkeit der Schweißverbindung erhöhen.

Gemäß einem weiteren Ausführungsbeispiel der Erfindung weist das Aufheizmittel ferner zumindest eine weitere bandartige Struktur auf, welche neben der bandartigen Struktur angeordnet ist, wobei die weitere bandartige Struktur zumindest annähernd parallel zu der bandartigen Struktur orientiert ist.

Der Abstand zwischen einander benachbarten Bahnen kann beispielsweise zwischen 0,5mm und 50 mm, insbesondere zwischen 0,8mm und 10mm und weiter insbesondere zwischen 1mm und 1,5mm betragen.

Anschaulich ausgedrückt wird das Aufheizmittel mit zumindest zwei separaten Bahnen von bandartigen Strukturen gebildet. Dies hat den Vorteil, dass mit lediglich einer Art von bandartigen Struktur Aufheizmittel mit beliebiger Breite hergestellt werden können. Dabei kann das Aufheizmittel mehrstückig sein, d.h. die bandartige Struktur und die zumindest eine weitere bandartige Struktur sind nicht miteinander verbunden und werden vor einem Schweißvorgang separat zwischen die beiden zu verschweißenden Objekte eingelegt.

Die verschiedenen bandartigen Strukturen können jedoch auch (an ihren Längsseiten) miteinander verbunden sein. Dabei kann die Verbindung unmittelbar, beispielsweise mit einer gewissen Überlappung, realisiert sein. Alternativ können die bandartigen Strukturen auch über ein nichtleitendes bzw. nicht ferromagnetisches Material verbunden sein, was in Übereinstimmung mit der vorstehend beschrieben separaten Konfiguration dazu führt, dass in Bezug auf einen induktiven Schweißvorgang das Aufheizmittel zumindest zwei separate Sekundärspulen gebildet sind.

Gemäß einem weiteren Ausführungsbeispiel der Erfindung weist die bandartige Struktur eine Oberfläche mit Erhöhungen und Vertiefungen auf, wobei ein mittlerer Höhenunterschied zwischen den Erhöhungen und den Vertiefungen im Bereich zwischen 0,01mm und 2mm, insbesondere im Bereich zwischen 0,1mm und 1,5mm und weiter insbesondere im Bereich zwischen 0,5mm und 1,2mm liegt.

Die Oberflächenrauigkeit kann auf Dickenunterschieden der bandartigen Struktur und/oder auf einer Vielzahl von lokalen Deformationen bzw. Verbiegungen basieren.

Die hier beschriebene Rauigkeit ist insbesondere dann von Vorteil, wenn das zweite äußere Objekt, beispielsweise eine Muffe, aus einem Kunststoff mit thermisch schrumpfenden Eigenschaften besteht. Dadurch wird beim Schweißvorgang ein beidseitiger Anpressdruck auf das Aufheizmittel ausgeübt. Durch die raue Gestaltung der Oberfläche der bandartigen Struktur kann erreicht werden, dass der Übergang zum Kunststoff an den Punkten der größten Erhöhung einen höheren Anpressdruck ausgesetzt ist als in anderen Bereichen. Aufgrund des höheren Drucks wird eine bessere Wärmeankopplung erreicht, was wiederum zu einem früheren Aufschmelzen in der entsprechenden Region führt. Diese Vorschmelze wird nun beim langsamen Erweichen des gesamten Kunststoffteils bevorzugt in die Öffnungen gedrückt, was zu einer besonders festen Verbindung zwischen den Kunststoffteilen führt.

Gemäß einem weiteren Aspekt der Erfindung wird eine Anordnung beschrieben, welche aufweist (a) ein erstes inneres Objekt, welches ein erstes Kunststoffmaterial aufweist, das eine erste Schmelztemperatur hat; (b) ein zweites äußeres Objekt, welches das erste innere Objekt zumindest teilweise umgibt und welches ein zweites Kunststoffmaterial aufweist, das eine zweite Schmelztemperatur hat; (c) ein Aufheizmittel, welches sich zwischen dem ersten inneren Objekt und dem zweiten äußeren Objekt befindet, wobei das Aufheizmittel eine bandartige Struktur aufweist. Die bandartige Struktur weist ein ferromagnetisches Material auf, das induktiv erhitzbar ist und das eine vorbestimmte Curie-Temperatur hat, welche höher ist als die erste Schmelztemperatur und/oder die zweite Schmelztemperatur. In der bandartigen Struktur ist eine Mehrzahl von Öffnungen ausgebildet, in welchen sich ein verfestigtes Kunststoffmaterial befindet, welches das erste innere Objekt mit dem zweiten äußeren Objekt verbindet. Ferner liegt eine erste Temperaturdifferenz zwischen der vorbestimmten Curie-Temperatur und der ersten Schmelztemperatur und/oder eine zweite Temperaturdifferenz zwischen der vorbestimmten Curie-Temperatur und der zweiten Schmelztemperatur im Bereich zwischen 5K und 100K.

Auch der beschriebenen Anordnung liegt die Erkenntnis zugrunde, dass durch eine gezielte Auswahl der beteiligten Materialien, nämlich dem ersten Kunststoffmaterial, dem zweiten Kunststoffmaterial und dem ferromagnetischen Material, auf zuverlässige Weise eine besonders gute Schweißverbindung zwischen beiden Kunststoffobjekten hergestellt worden ist. Diese gute Schweißverbindung, welche aus einem Schweißvorgang resultiert, bei dem eine automatische Temperaturbegrenzung stattgefunden haben kann, zeichnet sich insbesondere dadurch aus, dass die Form der beiden Kunststoffobjekte aufgrund lediglich einer oberflächlichen Kunststoffverflüssigung erhalten geblieben ist und trotzdem eine mechanisch feste Schweißverbindung hergestellt wurde. Beim Verschweißen der beiden Kunststoffobjekte wurde zumindest annähernd genau diejenige Menge an ersten und/oder zweiten Kunststoffmaterial aufgeschmolzen, welche einerseits eine mechanisch feste Verbindung zur Folge hat und welche andererseits die Formstabilität der beiden Objekte nicht beeinträchtigt, weil nur eine oberflächennahe Schicht von Kunststoffmaterial aufgeschmolzen wurde.

Das sich in den Öffnungen befindliche verfestigte Kunststoffmaterial kann das erste Kunststoffmaterial des ersten inneren Objekts und/oder das zweite Kunststoffmaterial des zweiten äußeren Objekts sein. Alternativ oder in Kombination kann es sich auch um ein Kunststoffmaterial handeln, welches bereits vor dem Schweißvorgang in den Öffnungen vorhanden war.

Das Aufheizmittel kann insbesondere ein Aufheizmittel sein, welches die Eigenschaften von zumindest einem der vorstehend anhand von mehreren Ausführungsbeispielen beschriebenen Aufheizmittel aufweist.

Gemäß einem weiteren Ausführungsbeispiel der Erfindung liegt bzw. liegen die erste Temperaturdifferenz und/oder die zweite Temperaturdifferenz im Bereich zwischen 10K und 80K, insbesondere im Bereich zwischen 20K und 60K und weiter insbesondere im Bereich zwischen 30 und 50K. Dies hat den Vorteil, dass die Qualität der Schweißverbindung besonders hoch ist.

Gemäß einem weiteren Ausführungsbeispiel der Erfindung sind die beiden Kunststoffmaterialien gleich. Dies hat den Vorteil, dass in Hinblick auf eine gute Schweißverbindung lediglich eine Abstimmung zwischen zwei Temperaturen, der Curie-Temperatur und der (einheitlichen) Schmelztemperatur erfolgen muss. Zudem verbinden sich gleiche Kunststoffmaterialien besonders gut, so dass die Festigkeit der Schweißverbindung besonders hoch ist.

Gemäß einem weiteren Ausführungsbeispiel der Erfindung weist die Anordnung ferner ein drittes inneres Objekt auf, welches ein drittes Kunststoffmaterial aufweist, das eine dritte Schmelztemperatur hat, wobei das zweite äußere Objekt auch das dritte innere Objekt zumindest teilweise umgibt und wobei sich das Aufheizmittel auch zwischen dem dritten inneren Objekt und dem zweiten äußeren Objekt befindet. Dies hat den Vorteil, dass mit der beschriebenen Anordnung mehr als zwei Kunststoffobjekte miteinander verbunden sind, so dass sich ein besonders breiter technischer Anwendungsbereich für die beschriebene Anordnung ergibt.

Bevorzugt ist das dritte Kunststoffmaterial das gleiche Kunststoffmaterial wie das erste Kunststoffmaterial und/oder das zweite Kunststoffmaterial. Damit ergeben sich die gleichen Vorteile, die vorstehend für zwei gleiche Kunststoffmaterialien beschrieben sind.

In einer besonderen Ausführungsform, kann das dritte Kunststoffmaterial eine Zusammensetzung (aus mehreren Kunststoffen) sein oder ein Additiv aufweisen, welches eine reaktive Veränderung im Zuge der Aufheizung bzw. des Schmelzens bewirkt.

Solche Reaktionen können beispielhaft sein:

(A) Vernetzung durch Polymeraddition (also Epoxidgruppe mit Amin, Amid, Säure, Säureanhydrid, Alkohol, Phenol, Thiol oder Isocyanat (auch verkappt mit Amin, Amid, Alkohol, Phenol, Thiol)
(B) Vernetzung durch Wasserstoffelimination durch Peroxide und/oder Azoverbindungen
(C) Verknüpfung von Polymerketten durch Vinylpolymerisation, Silan-Vinyladdition, Thio-click-Addition, Azid-click-Addition

Anschaulich ausgedrückt können also auch reaktive Schmelzkleber in den thermischen Verbindungsvorgang miteinbezogen werden. Insbesondere können ggf. auch die zu verbindenden Polymeroberflächen des ersten inneren (Polymer)Objekts und des zweiten äußeren (Polymer)Objekts in die o.g. Reaktionen eingreifen .

Gemäß einem weiteren Ausführungsbeispiel der Erfindung ist das erste innere Objekt ein Kunststoffrohr, das dritte innere Objekt ist ein weiteres Kunststoffrohr und das zweite äußere Objekt ist eine Kunststoffmuffe, welche zwei einander zugewandte Enden, ein Ende des Kunststoffrohres und ein weiteres Ende des weiteren Kunststoffrohres, umschließt. Mit der beschriebenen Anordnung kann auf vorteilhafte Weise eine Rohrleitung gebildet werden, welche aus mehreren Kunststoffrohren zusammengesetzt ist.

Um einen widerstandsarmen Durchfluss von einem Fluid an der Stelle der Verbindung der beiden Kunststoffrohre zu gewährleisten, können die beiden stirnseitigen Enden der beiden beteiligten Kunststoffrohren einen möglichst kleinen Abstand voneinander aufweisen.

Die Kunststoffrohre können Fernwärmerohre sein, welche ggf. nach außen und/oder nach innen thermisch isoliert sind. Optional können die Fernwärmerohre in bekannter Weise ein inneres Rohr bzw. ein Kernrohr aus Metall (z.B. Stahl) beinhalten, wobei aneinander gefügte Kernrohre miteinander verschweißt sein können.

Gemäß einem weiteren Aspekt der Erfindung wird ein System beschrieben, welches aufweist (a) eine Anordnung der vorstehend beschriebenen Art und (b) einen Generator zum Erzeugen eines elektromagnetischen Feldes, welches eine Primärspule des Generators induktiv mit dem Aufheizmittel koppelt.

Dem beschriebenen System liegt die Erkenntnis zugrunde, dass bei der Verwendung von geeigneten Materialien für die Anordnung bei einem Schweißvorgang eine Überhitzung der Anordnung auf effektive Weise verhindert werden kann, weil eine induktive Energieübertragung von dem Generator auf das Aufheizmittel bei dem Erreichen der Curie-Temperatur automatisch stoppt. Dies hat den Vorteil, dass eine Überhitzung der Kunststoffobjekte auch dann verhindert werden kann, wenn der Generator über keine oder lediglich eine ungenaue Steuerung der induktiven Energieübertragung verfügt.

Besondere Vorteile ergeben sich, wenn es sich bei dem Generator um einen mobilen Generator handelt, so dass der Abstand zwischen der Primärspule und dem Aufheizmittel nicht genau vorgegebenen, so dass man in der Praxis lediglich eine sehr ungenaue Kenntnis über die induktiv übertragene Leistung hat. Durch eine geeignete Wahl der Curie-Temperatur kann, wie bereits vorstehend im Detail erläutert, automatisch eine optimale Selbstbegrenzung des induktiven Energieeintrags erfolgen.

Gemäß einem weiteren Aspekt der Erfindung wird ein Verfahren zum thermischen Verbinden zweier jeweils ein Kunststoffmaterial aufweisenden Objekte beschrieben. Das Verfahren weist auf (a) ein Anlegen eines Aufheizmittels des vorstehend beschriebenen Typs an ein erstes inneres Objekt oder an ein zweites äußeres Objekt, wobei das Aufheizmittel eine bandartige Struktur mit einer Mehrzahl von Öffnungen und ein ferromagnetisches Material aufweist; (b) ein Anordnen des zweiten äußeren Objekts relativ zu dem ersten inneren Objekt, so dass das erste innere Objekt zumindest teilweise von dem zweiten äußeren Objekt umgeben ist und sich das Aufheizmittel zwischen dem ersten inneren Objekt und dem zweiten äußeren Objekt befindet; (c) ein induktives Erhitzen des Aufheizmittels, so dass Kunststoffmaterial des ersten inneren Objekts und/oder Kunststoffmaterial des zweiten äußeren Objekts aufschmilzt; (d) ein Eindringen von aufgeschmolzenem Kunststoffmaterial des ersten inneren Objekts und/oder von aufgeschmolzenem Kunststoffmaterial des zweiten äußeren Objekts in die Öffnungen, so dass die beiden Kunststoffmaterialien miteinander in Kontakt kommen, und/oder Aufschmelzen von Kunststoffmaterial, welches sich bereits in den Öffnungen befindet; (e) ein Reduzieren einer auf das Aufheizmittel induktiv übertragenen Leistung infolge einer Annäherung der Temperatur des ferromagnetischen Materials an eine Curie-Temperatur des ferromagnetischen Materials; und (f) ein Abkühlen des aufgeschmolzenen Kunststoffmaterials des ersten inneren Objekts und/oder des aufgeschmolzenen Kunststoffmaterials des zweiten äußeren Objekts, so dass die beiden Objekte mechanisch miteinander verbunden sind.

Auch dem beschriebenen Verfahren liegt die Erkenntnis zugrunde, dass eine induktive Energieübertragung von einem Generator mit einer induktiven Primärspule auf das Aufheizmittel automatisch reduziert und letztendlich insbesondere mit Hilfe einer intelligenten Ansteuerung der Primärspule gestoppt wird, wenn die Temperatur des ferromagnetischen Materials sich an die Curie-Temperatur annähert und diese ggf. sogar erreicht. Durch eine geeignete Wahl der beteiligten Materialien kann somit erreicht werden, dass immer ein zumindest annähern optimaler Energiebetrag induktiv auf das Aufheizmittel übertragen wird.

Gemäß einem Ausführungsbeispiel der Erfindung wird das Aufheizmittel derart an das erste innere Objekt oder an das zweite äußere Objekt angelegt, dass die beiden Enden der bandartigen Struktur überlappen.

Anschaulich ausgedrückt wird eine geschlossene Schleife gebildet, welche in Bezug auf die induktive Kopplung eine kurzgeschlossene Sekundärspule mit einer Wicklung darstellt. Die induktive Energieübertragung basiert zumindest teilweise auf der makroskopischen elektrischen Leitfähigkeit. Eine geschlossene Windung erlaubt eine besonders effektive induktive Einkopplung von Energie.

Gemäß einem weiteren Ausführungsbeispiel der Erfindung wird das Aufheizmittel derart an das erste innere Objekt oder an des zweite äußere Objekt angelegt wird, dass die beiden Enden der bandartigen Struktur voneinander getrennt sind.

Anschaulich ausgedrückt wird eine offene Schleife gebildet. Die induktive Energieübertragung erfolgt hier im Wesentlichen durch Ummagnetisierungsverluste und die Erzeugung von Wirbelströmen, wobei Wirbelströme eine mikroskopische Leitfähigkeit der bandartigen Struktur erfordern.

Durch eine Konzentration auf eine Erwärmung bzw. Aufheizung ausschließlich basierend auf Ummagnetisierungsverlusten (durch Wegfall einer makroskopischen Sekundärwicklung) kann die Erregungsfrequenz der Primärspule eines Induktionsgenerators erhöht werden. Dies hat eine bessere Energieeffizienz während des Schweißprozesses zur Folge und lässt zudem auch vielfältige Geometrien für die Primärspule zu. Insbesondere muss die Primärspule beim Schweißprozess nicht mehr um das erste innere Objekt herum geschlossen sein, da ja kein sekundärseitiger Kurzschluss gegeben ist. Auch dadurch vergrößert sich die Vielfalt für mögliche Geometrien von Primärspulen. Insbesondere können Geometrien von Primärspulen verwendet werden, welche lediglich wenig verschmutzungs-und/oder verschleißanfällige Steckverbindung beinhalten.

Es wird darauf hingewiesen, dass Ausführungsformen der Erfindung mit Bezug auf unterschiedliche Erfindungsgegenstände beschrieben wurden. Insbesondere sind einige Ausführungsformen der Erfindung mit auf eine Vorrichtung bezogene Ansprüche und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

Weitere Vorteile und Merkmale der vorliegenden Erfindung ergeben sich aus der folgenden beispielhaften Beschreibung derzeit bevorzugter Ausführungsformen. Die einzelnen Figuren der Zeichnung dieses Dokuments sind lediglich als schematisch und als nicht maßstabsgetreu anzusehen.

Kurze Beschreibung der Zeichnung

Figur 1a    zeigt in einer Draufsicht ein Aufheizmittel mit einer Mehrzahl von Öffnungen, die einer bandartigen Struktur unregelmäßig angeordnet sind.

Figur 1b    zeigt in einer Draufsicht ein Aufheizmittel mit einer Mehrzahl von Öffnungen die in einem regelmäßigen Raster angeordnet sind.

Figur 2    zeigt in einer Seitenansicht ein Aufheizmittel, welches zwei Schichten von ferromagnetischen Materialien aufweist, die unterschiedliche Curie-Temperaturen haben.

Figur 3    zeigt in einer Seitenansicht ein Aufheizmittel mit einer Haftveränderungsschicht, welche auf einer bandartigen Struktur mit einem ferromagnetischen Material ausgebildet ist.

Figur 4    zeigt in einer vergrößerten Querschnittsansicht ein Aufheizmittel mit einer Öffnung, welche in einer bandartigen Struktur ausgebildet ist, wobei auf den beiden flächigen Oberflächen der bandartigen Struktur jeweils eine Haftverstärkungsschicht und an den Wänden der Öffnung eine Haftreduzierungsschicht ausgebildet ist.

Figur 5    zeigt in einer vergrößerten Querschnittsansicht eine in einer bandartigen Struktur ausgebildete Öffnung, welche an einer Oberseite eine Verrundung aufweist.

Figur 6    zeigt in einer vergrößerten Querschnittsansicht ein Aufheizmittel mit einer schrägen Öffnung.

Figur 7    zeigt in einer schematischen Draufsicht eine Anordnung mit zwei inneren Rohren und einer äußeren Muffe, welche allesamt mittels eines Aufheizmittels mit insgesamt vier bandartigen Strukturen miteinander verschweißt wurden.

Figur 8    zeigt in einer Querschnittsansicht ein Aufheizmittel, welches eine geschlossene Struktur bildet und sich zwischen einem inneren Rohr und einer äußeren Muffe befindet.

Figur 9    zeigt in einer Querschnittsansicht ein Aufheizmittel, welches eine offene Struktur bildet und ein inneres Rohr teilweise umgibt.

Detaillierte Beschreibung

Es wird darauf hingewiesen, dass in der folgenden detaillierten Beschreibung Merkmale bzw. Komponenten von unterschiedlichen Ausführungsformen, die mit den entsprechenden Merkmalen bzw. Komponenten von einer anderen Ausführungsform nach gleich oder zumindest funktionsgleich sind, mit den gleichen Bezugszeichen oder mit einem Bezugszeichen versehen sind, welches sich von dem Bezugszeichen der gleichen oder zumindest funktionsgleichen Merkmale bzw. Komponenten lediglich in der ersten Ziffer unterscheidet. Zur Vermeidung von unnötigen Wiederholungen werden bereits anhand einer vorher beschriebenen Ausführungsform erläuterte Merkmale bzw. Komponenten an späterer Stelle nicht mehr im Detail erläutert.

Ferner wird darauf hingewiesen, dass die nachfolgend beschriebenen Ausführungsformen lediglich eine beschränkte Auswahl an möglichen Ausführungsvarianten der Erfindung darstellen. Insbesondere ist es möglich, die Merkmale einzelner Ausführungsformen in geeigneter Weise miteinander zu kombinieren, so dass für den Fachmann mit den hier explizit dargestellten Ausführungsvarianten eine Vielzahl von verschiedenen Ausführungsformen als offensichtlich offenbart anzusehen sind.

Außerdem wird darauf hingewiesen, dass raumbezogene Begriffe, wie beispielsweise "vorne" und "hinten", "oben" und "unten", "links" und "rechts", etc. verwendet werden, um die Beziehung eines Elements zu einem anderen Element oder zu anderen Elementen zu beschreiben, wie in den Figuren veranschaulicht. Demnach können die raumbezogenen Begriffe für Ausrichtungen gelten, welche sich von den Ausrichtungen unterscheiden, die in den Figuren dargestellt sind. Es versteht sich jedoch von selbst, dass sich alle solchen raumbezogenen Begriffe der Einfachheit der Beschreibung halber auf die in den Zeichnungen dargestellten Ausrichtungen beziehen und nicht unbedingt einschränkend sind, da die jeweils dargestellte Vorrichtung, Komponente etc., wenn sie in Verwendung ist, Ausrichtungen annehmen kann, die von den in der Zeichnung dargestellten Ausrichtungen verschieden sein können.

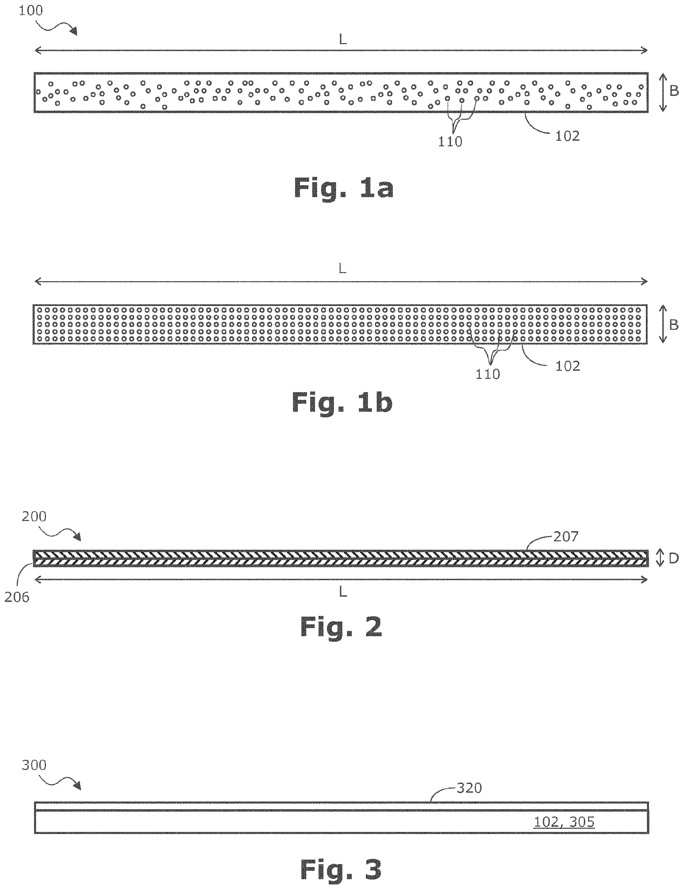

**Figur 1a** zeigt in einer Draufsicht ein Aufheizmittel 100. Das Aufheizmittel 100 besteht im Wesentlichen aus einer bandartigen Struktur 102, in welcher eine Mehrzahl von Öffnungen 110, beispielsweise mittels Stanzens, ausgebildet ist. Gemäß dem hier dargestellten Ausführungsbeispiel sind die Öffnungen 110 räumlich unregelmäßig angeordnet. Wie vorstehend eingehend erläutert, ermöglichen die Öffnungen bei einem Schweißvorgang ein Durchließen von aufgeschmolzen Kunststoffmaterial durch die bandartige Struktur 102. Alternativ oder Kombination kann sich auch bereits vor dem eigentlichen Schweißvorgang ein geeignetes Kunststoffmaterial in den Öffnungen befinden, welches sich beim Verschweißen dann mit den Kunststoffmaterialien der beiden zu verschweißenden Objekte verbindet.

Bei bevorzugten Ausführungsbeispielen liegt eine Länge L der bandartigen Struktur 102 in einem Bereich von 40mm bis 3200mm und insbesondere im Bereich von 60mm bis 800mm. Ein typisches Verhältnis zwischen der Länge L und einer Breite B der bandartigen Struktur 102 ist kleiner als 1:10, insbesondere kleiner als 1:100.

**Figur 1b** zeigt in einer Draufsicht ein Aufheizmittel 200 gemäß einem weiteren Ausführungsbeispiel der Erfindung. Hier sind die Öffnungen 110 in einem regelmäßigen Raster angeordnet. In anderen nicht dargestellten Ausführungsformen sind die Öffnungen so gegeneinander versetzt, dass sich ebenfalls ein regelmäßiges Muster ergibt.

Sowohl regelmäßig als auch unregelmäßig angeordnete Öffnungen 110 können einen mittleren Abstand zueinander haben, welcher im Bereich zwischen 0,1mm und 5mm und insbesondere im Bereich zwischen 0,5mm und 3mm liegt.

Die bandartige Struktur 102 kann aus einem gelochten Metallband bestehen. Das ferromagnetische Material der bandartigen Struktur 102 kann beispielsweise Stahl sein. Um eine zusätzliche nicht dargestellte Konturierung zu erreichen, kann das gelochte Metallband ein mittels einer ausreichenden Zugkraft gestrecktes Metallband sein.

Die bandartige Struktur 102 kann bei anderen Ausführungsformen ein gewobenes oder geflochtenes Gelege aus Einzeldrähten sein. Diese können optional eine funktionale Beschichtung für eine verbesserte Wärmeleitung, einen Korrosionsschutz, etc. haben.

**Figur 2** zeigt in einer Seitenansicht ein Aufheizmittel 200, welches zwei Schichten von ferromagnetischen Materialien aufweist. Eine erste Schicht 206 weist ein erstes ferromagnetisches Material einer ersten Curie-Temperatur auf. Die zweite Schicht 207 weist ein zweites ferromagnetisches Material mit einer zweiten Curie-Temperatur auf. Gemäß dem hier dargestellten Ausführungsbeispiel sind die beiden Curie-Temperaturen unterschiedlich. Damit kann sich eine mittlere Curie-Temperatur des Aufheizmittels 200 ergeben, welche durch eine geeignete Wahl der beiden ferromagnetischen Materialien auf die jeweilige spezifische Schweißanwendung angepasst werden kann.

In anderen Ausführungsformen stellt sich keine gemeinsame mittlere Curie-Temperatur ein, so dass ein induktiver Energieeintrag auf das Aufheizmittel 200 nach einem Erreichen der niedrigeren Curie-Temperatur reduziert aber nicht vollständig unterbunden wird. In der Folge wird sich bei gleicher induktiver Erregung eine langsamere Temperaturerhöhung ergeben, wobei mit dem Erreichen der höheren Curie-Temperatur eine induktive Kopplung zwischen einer Erregerspule und dem Aufheizmittel ausgeschalten wird.

Bei bevorzugten Ausführungsformen liegt eine Dicke D des Aufheizmittels 200 in einem Bereich zwischen 0,1mm und 5mm, und insbesondere im Bereich zwischen 0,5mm und 3mm. Diese Dimensionen gelten auch für eine bandartige Struktur, welches lediglich aus einer Schicht von einem ferromagnetischen Material besteht.

Es wird darauf hingewiesen, dass das Aufheizmittel 200 an seinen flächigen Seiten, d.h. in Figur 2 an der oberen Oberfläche und/oder an der unteren Oberfläche, eine Oberflächenrauigkeit aufweisen kann. Eine solche Oberflächengenauigkeit basiert auf Erhöhungen und Vertiefungen, welche zueinander einen mittleren Höhenunterschied aufweisen. Bei bevorzugten Ausführungsformen ist dieser mittlere Höhenunterschied größer als $10\mu m$. Eine Oberflächenrauigkeit kann auch bei einer einschichtigen bandartigen Struktur zu verbesserten Schweißergebnissen führen.

**Figur 3** zeigt in einer Seitenansicht ein Aufheizmittel 300 mit einer Haftveränderungsschicht 320, welche auf einer bandartigen Struktur 102 ausgebildet ist, die ein ferromagnetisches Material 305 aufweist. Gemäß dem hier dargestellten Ausführungsbeispiel ist die Haftverhinderungsmittel eine einfache Oxidschicht.

Die Haftveränderungsschicht 320 kann dazu beitragen, dass das Fließverhalten von aufgeschmolzenem Kunststoff, welcher mit dem Aufheizmittel 300 in Kontakt kommt, in Hinblick auf eine nach dem Abkühlen besonders stabile Schweißverbindung zu verbessern.

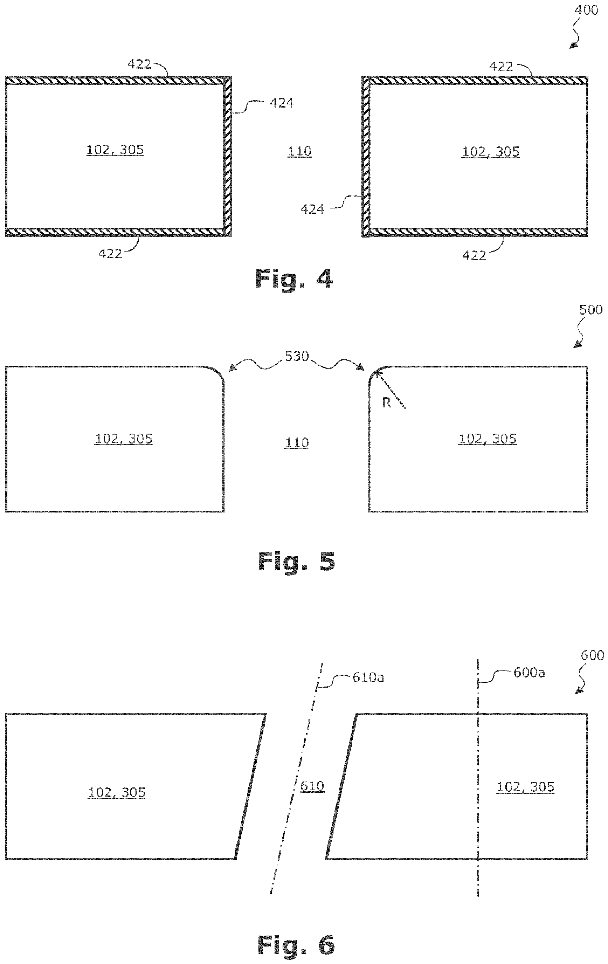

**Figur 4** zeigt in einer vergrößerten Querschnittsansicht ein Aufheizmittel 400 mit einer Öffnung 110, welche in einer bandartigen Struktur 102 ausgebildet ist. Auf den beiden flächigen Oberflächen, d.h. der Unterseite und der Oberseite, der bandartigen Struktur 102 ist jeweils eine Haftverstärkungsschicht 422 ausgebildet. An den Seitenwänden der Öffnung 110 ist eine Haftreduzierungsschicht 424 ausgebildet. Dadurch kann auf vorteilhafte Weise das Fließverhalten von aufgeschmolzenem Kunststoff durch die Öffnung 110 hindurch verbessert werden, so dass sich durch die Öffnung 110 hindurch eine besonders stabile Kunststoffverbindung ausbilden kann. Ferner kann durch eine Haftkraftverstärkung an den beiden flächigen Oberflächen der bandartigen Struktur 102 auch eine mechanisch mehr oder weniger starke Verbindung zwischen dem Aufheizmittel 400 und dem jeweiligen Kunststoffobjekt hergestellt werden. Dies trägt zu einer weiteren Verbesserung der gesamten Schweißverbindung bei.

**Figur 5** zeigt in einer vergrößerten Querschnittsansicht ein Aufheizmittel 500, bei dem ebenfalls in einer bandartigen Struktur 102 aus einem ferromagnetischen Material 305 eine Mehrzahl von Öffnungen 110 ausgebildet ist. Wie aus der exemplarisch dargestellten Öffnung 110 ersichtlich, erfolgt ein Übergang von einer flächigen Oberseite der bandartigen Struktur in die Öffnung 110 mit einer Verrundung 530. Diese trägt dazu bei, dass ein zunächst horizontal fließendes aufgeschmolzenes Kunststoffmaterial beim Eindringen in die Öffnung 110 nicht um eine Ecke herum fließen muss. Dadurch wird das Fließverhalten des aufgeschmolzen Kunststoffs in die Öffnung 110 hinein verbessert.

Bei bevorzugten Ausführungsbeispielen liegt ein Radius R der Verrundung in einem Bereich von 1μm bis 100μm. Es wird jedoch darauf hingewiesen, dass anstelle von einer im Querschnitt kreisförmigen Verrundung auch andere Arten von Abschrägungen, beispielsweise eine Versenkung, zu einem verbesserten Fließverhalten von aufgeschmolzenem Kunststoff in die Öffnung 110 hinein beitragen können.

**Figur 6** zeigt in einer vergrößerten Querschnittsansicht ein Aufheizmittel 600 mit einer bandartigen Struktur 102, in welcher eine Mehrzahl von schrägen Öffnungen 610 ausgebildet ist. Die "Schrägheit" der Öffnungen bezieht sich dabei auf einen Winkel, welcher zwischen einer Längsachse 610a der Öffnung 610 und einer Flächennormalen 600a der flächigen Oberflächen der bandartigen Struktur 102 gebildet ist. Bei bevorzugten Ausführungsbeispielen liegt dieser Winkel in einem Bereich zwischen 10° und 60°, insbesondere in einem Bereich zwischen 20° und 50° und weiter insbesondere in einem Bereich zwischen 30° und 40°.

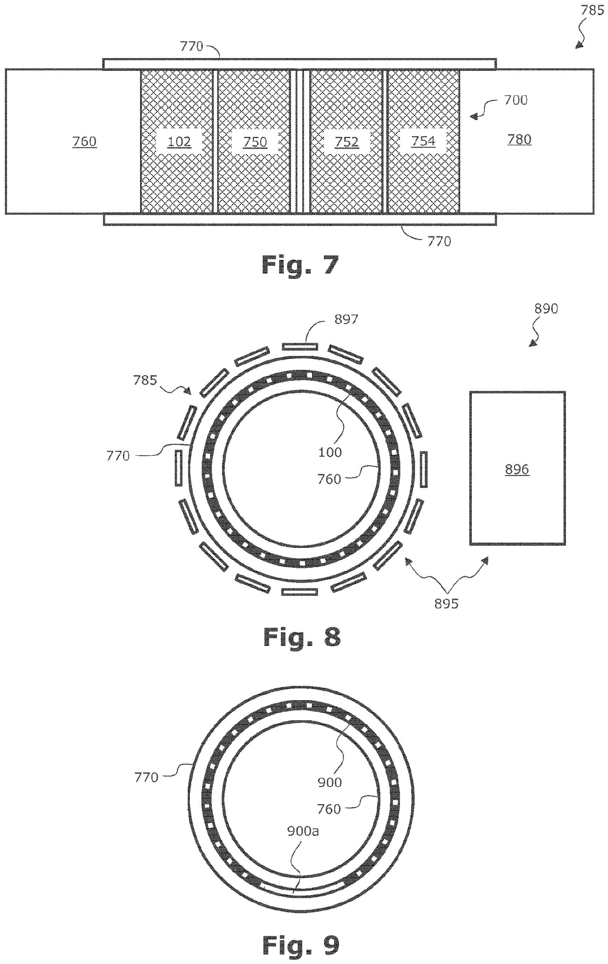

**Figur 7** zeigt in einer schematischen Draufsicht eine Anordnung 785 mit zwei jeweils als Rohr ausgebildeten inneren Kunststoffobjekten 760 und 780 und einem äußeren als eine Muffe ausgebildeten äußeren Kunststoffobjekt 770, welche allesamt mittels eines Aufheizmittels 700 miteinander verschweißt wurden. Das Aufheizmittel 700 umfasst gemäß dem hier dargestellten Ausführungsbeispiel insgesamt vier bandartige Strukturen, eine erste bandartige Struktur 102 sowie drei weitere bandartigen Strukturen 750, 752 und 754, welche mit jeweils einer geringen Beabstandung parallel zueinander um das Kunststoffrohr 760 bzw. um das weitere Kunststoffrohr 780 umwickelt wurden. Das vier bandartige Strukturen umfassende Aufheizmittel 700 befindet sich, wie aus Figur 7 ersichtlich, zwischen der Muffe 770 und dem Kunststoffrohr 760 bzw. zwischen der Muffe 770 und dem weiteren Kunststoffrohr 780.

In diesem Zusammenhang wird darauf hingewiesen, dass die Figur 7 die Anordnung 785 grundsätzlich in einer Draufsicht zeigt. Aus Gründen der besseren Übersichtlichkeit ist lediglich die Muffe 770 in einer Querschnittsansicht dargestellt.

**Figur 8** zeigt ein System 890 aufweisend (a) die Anordnung 785, welche in einer Querschnittsansicht dargestellt ist, und (b) einen Induktionsgenerator 895, welcher dafür vorgesehen ist, das Aufheizmittel 100 induktiv zu erwärmen und so die Muffe 770 mit dem Kunststoffrohr 760 zu verschweißen. Der Induktionsgenerator 895 weist eine Erregungseinrichtung 896 sowie eine Primärspulenanordnung mit einer Mehrzahl von Primärspulen 897 auf, welche Primärspulenanordnung um die Muffe 770 herum angeordnet ist und welche von der Erregungseinrichtung 896 mit einem elektrischen Wechselstrom bestromt werden kann.

Wie aus Figur 8 ersichtlich, ist gemäß dem hier dargestellten Ausführungsbeispiel das Aufheizmittel 100 vollständig um das Kunststoffrohr 760 gewickelt, so dass sich zwischen den beiden Enden des Aufheizmittels 760 ein nicht dargestellter Überlapp ergibt. Das Aufheizmittel kann somit als eine (geschlossene) Sekundärspule angesehen werden, die mit der Mehrzahl der Primärspulen 897 elektromagnetisch und damit auch induktiv gekoppelt ist.

Es wird darauf hingewiesen, dass die Primärspulenanordnung alternativ auch lediglich eine einzige Primärspule aufweisen kann, welche um die Muffe 770 herum verläuft. Eine solche um die Muffe 770 herum gelegte einzige Primärspule kann beispielsweise mit geeigneten elektrischen Steckverbindungen realisiert werden, welche nach einem hoffentlich erfolgreichen Schweißvorgang geöffnet werden können, so dass die einzige Primärspule von der Anordnung 785 entfernt werden kann. Die induktive Kopplung zwischen dem Induktionsgenerator 895 bzw. dessen Primärspulenanordnung und dem Aufheizmittel 100, welches eine geschlossene Spulenwindung darstellt, entspricht der magnetischen bzw. induktiven Kopplung in einem herkömmlichen Transformator, wobei die Primärspulenanordnung der Primärspule des Transformators und das Aufheizmittel 100 der Sekundärspule des Transformators entspricht.

Bei bevorzugten Ausführungsbeispielen besteht die Muffe 770 aus einem Material, welches bei einem virtuellen Schweißvorgang ohne einen Gegendruck durch das Kunststoffrohr 760 eine Schrumpfung entlang ihres Umfangs ausführen würde, welche mindestens 10%, bevorzugt mindestens 20% und weiter bevorzugt mindestens 30% beträgt. Dadurch wird in der Praxis, also mit einem Gegendruck durch das Kunststoffrohr 760, eine mechanische Spannung erzeugt, welche zu einer Verbesserung des Schweißergebnisses führt.

**Figur 9** zeigt in einer Querschnittsansicht ein Aufheizmittel 900, welches das Kunststoffrohr 760 lediglich teilweise umgibt und somit eine offene Struktur bildet. Der offene Bereich ist in Figur 9 mit dem Bezugszeichen 900a gekennzeichnet. Wie bereits vorstehend beschrieben, kann bei der durch das Aufheizmittel 900 gegebenen offenen Schleife eine induktive Energieübertragung lediglich durch die Erzeugung von Wirbelströmen gewährleistet werden, welche eine mikroskopische Leitfähigkeit der bandartigen Struktur des Aufheizmittel 900 erfordern.

Es sollte angemerkt werden, dass der Begriff "aufweisen" nicht andere Elemente ausschließt und dass das "ein" nicht eine Mehrzahl ausschließt. Auch können Elemente, die in Zusammenhang mit unterschiedlichen Ausführungsbeispielen beschrieben sind, kombiniert werden. Es sollte auch angemerkt werden, dass Bezugszeichen in den Ansprüchen nicht als den Schutzbereich der Ansprüche beschränkend ausgelegt werden sollen.

## EP 3 529 056 B1

BEZUGSZEICHEN:

| | |
|---|---|
| 100 | Aufheizmittel |
| 102 | bandartige Struktur |
| 110 | Öffnungen |
| L | Länge |
| B | Breite |

| | |
|---|---|
| 200 | Aufheizmittel |
| 206 | erste Schicht / erstes ferromagnetisches Material mit erster Curie-Temperatur |
| 207 | zweite Schicht / zweites ferromagnetisches Material mit zweiter Curie-Temperatur |

| | |
|---|---|
| 300 | Aufheizmittel |
| 305 | ferromagnetisches Material |
| 320 | Haftkraftveränderungsschicht |
| D | Dicke |

| | |
|---|---|
| 400 | Aufheizmittel |
| 422 | Haftkraftverstärkungsschicht |
| 424 | Haftkraftreduzierungsschicht |

| | |
|---|---|
| 500 | Aufheizmittel |
| 530 | Verrundung |
| R | Verrundungsradius |

| | |
|---|---|
| 600 | Aufheizmittel |
| 600a | Flächennormale |
| 610 | schräge Öffnung |
| 610a | Längsachse |
| 700 | Aufheizmittel |
| 750 | weitere bandartige Struktur |
| 752 | weitere bandartige Struktur |
| 754 | weitere bandartige Struktur |
| 760 | erstes inneres Objekt / Kunststoffrohr |
| 770 | zweites äußeres Objekt / Muffe |
| 780 | drittes inneres Objekt / weiteres Kunststoffrohr |
| 785 | Anordnung |

| | |
|---|---|
| 890 | System |
| 895 | Generator / Induktionsgenerator |
| 896 | Erregungseinrichtung |
| 897 | Primärspule |

| | |
|---|---|
| 900 | Aufheizmittel |
| 900a | offener Bereich |

## Patentansprüche

1. Aufheizmittel (100, 200, 300, 400, 500, 600, 700, 900) zum thermischen Verbinden zweier jeweils ein Kunststoffmaterial aufweisenden Objekte (760, 770), wobei beim Verbinden ein erstes inneres Objekt (760) zumindest teilweise von einem zweiten äußeren Objekt (770) umgeben ist und sich das Aufheizmittel zwischen dem ersten inneren Objekt (760) und dem zweiten äußeren Objekt (770) befindet, das Aufheizmittel (100, 200, 300, 400, 500, 600, 700, 900) aufweisend

   eine bandartige Struktur (102), in welcher eine Mehrzahl von Öffnungen (110, 610) ausgebildet ist, und

13

wobei die Öffnungen (110, 610) derart dimensioniert sind, dass aufgeschmolzenes Kunststoffmaterial des ersten inneren Objekts (760) und/oder des zweiten äußeren Objekts (770) eindringen und sich mit aufgeschmolzenem Kunststoffmaterial des jeweils anderen Objekts (760, 770) verbinden kann, und/oder

wobei die Öffnungen (110, 660) mit einem Kunststoffmaterial gefüllt sind, welches sich mit aufgeschmolzenem Kunststoffmaterial des ersten inneren Objekts (760) und/oder des zweiten äußeren Objekts (770) verbinden kann; wobei

die bandartige Struktur (102) ein ferromagnetisches Material (305) aufweist, welches induktiv erhitzbar ist und welches eine Curie-Temperatur hat, die geringer ist als 460°C; **dadurch gekennzeichnet, dass** das Aufheizmittel (100, 200, 300, 400, 500, 600, 700, 900) ferner eine Haftkraftveränderungsschicht (320) aufweist, welche an zumindest einer Oberfläche der bandartigen Struktur (102) angebracht oder ausgebildet ist.

2. Aufheizmittel (100, 200, 300, 400, 500, 600, 700, 900) gemäß dem vorangehenden Anspruch, wobei

das ferromagnetische Material eine Curie-Temperatur hat, die geringer ist als 400°C, insbesondere geringer als 300°C und weiter insbesondere geringer als 250°C; und/oder wobei
die bandartige Struktur (102) mehrere ferromagnetische Materialien aufweist, welche unterschiedliche Curie-Temperaturen aufweisen.

3. Aufheizmittel (200) gemäß einem der vorangehenden Ansprüche, wobei die bandartige Struktur (102) einen schichtweisen Aufbau (206, 207) von unterschiedlichen Materialien aufweist, welche insbesondere eine unterschiedliche Härte, eine unterschiedliche Elastizität und/oder eine unterschiedliche Duktilität aufweisen; und/oder wobei die bandartige Struktur (102) konfiguriert ist, um eine geschlossene bandartige Struktur (102) zu bilden, welche durchgängig elektrisch leitfähig ist.

4. Aufheizmittel (400) gemäß einem der vorangehenden Ansprüche, wobei die Haftkraftveränderungsschicht

an der Oberfläche der bandartigen Struktur (102) eine Haftkraftverstärkungsschicht (422) aufweist und/oder
an den Seitenwänden der Öffnungen (110) eine Haftkraftreduzierungsschicht (424) aufweist.

5. Aufheizmittel (300) gemäß einem der vorangehenden Ansprüche, wobei die Haftkraftveränderungsschicht eine Oxidschicht (320) ist und/oder Carbonate aufweist.

6. Aufheizmittel (100, 200, 300, 400, 500, 600, 700, 900) gemäß einem der vorangehenden Ansprüche, wobei die Öffnungen einen mittleren Abstand s voneinander haben, welcher in Bezug zu einer Dicke d der bandartigen Struktur (102) zumindest eine der folgenden Gleichungen erfüllt:

$$0,5 < s/d < 2; \quad 0,7 < s/d < 1,5; \quad 0,8 < s/d < 1,3; \quad 0,9 < s/d < 1,1.$$

7. Aufheizmittel (500) gemäß einem der vorangehenden Ansprüche, wobei ein Übergang zwischen der flächigen Oberfläche der bandartigen Struktur (102) und einer Öffnung (110) verrundet ist; und/oder wobei zumindest einige der Öffnungen (610) jeweils eine Längsachse (610a) aufweisen, welche mit einer Flächennormale (600a) der Oberfläche der bandartigen Struktur (102) einen Winkel von ungleich Null bilden.

8. Aufheizmittel (700) gemäß einem der vorangehenden Ansprüche, ferner aufweisend
zumindest eine weitere bandartige Struktur (750, 752, 754), welche neben der bandartigen Struktur (102) angeordnet ist, wobei die weitere bandartige Struktur (750, 752, 754) zumindest annähernd parallel zu der bandartigen Struktur (102) orientiert ist.

9. Aufheizmittel (100, 200, 300, 400, 500, 600, 700, 900) gemäß einem der vorangehenden Ansprüche, wobei die bandartige Struktur (102) eine Oberfläche mit Erhöhungen und Vertiefungen aufweist, wobei ein mittlerer Höhenunterschied zwischen den Erhöhungen und den Vertiefungen im Bereich zwischen 0,01mm und 2mm, insbesondere im Bereich zwischen 0,1mm und 1,5mm und weiter insbesondere im Bereich zwischen 0,5mm und 1,2mm liegt.

10. Anordnung (785) aufweisend

ein erstes inneres Objekt (760), welches ein erstes Kunststoffmaterial aufweist, das eine erste Schmelztemperatur hat;

ein zweites äußeres Objekt (770), welches das erste innere Objekt (760) zumindest teilweise umgibt und welches ein zweites Kunststoffmaterial aufweist, das eine zweite Schmelztemperatur hat;

ein Aufheizmittel (700), welches sich zwischen dem ersten inneren Objekt (760) und dem zweiten äußeren Objekt (770) befindet, wobei das Aufheizmittel (700) eine bandartige Struktur (102) und eine Haftkraftveränderungsschicht (320) aufweist, welche an zumindest einer Oberfläche der bandartigen Struktur (102) angebracht oder ausgebildet ist, wobei

- die bandartige Struktur (102) ein ferromagnetisches Material aufweist, das induktiv erhitzbar ist und eine vorbestimmte Curie-Temperatur hat, welche höher ist als die erste Schmelztemperatur und/oder die zweite Schmelztemperatur,
- in der bandartigen Struktur eine Mehrzahl von Öffnungen (110) ausgebildet ist, in welchen sich ein verfestigtes Kunststoffmaterial befindet, welches das erste innere Objekt (760) mit dem zweiten äußeren Objekt (760) verbindet, und
- eine erste Temperaturdifferenz zwischen der vorbestimmten Curie-Temperatur und der ersten Schmelztemperatur und/oder eine zweite Temperaturdifferenz zwischen der vorbestimmten Curie-Temperatur und der zweiten Schmelztemperatur im Bereich zwischen 5K und 100K liegt.

11. Anordnung (785) gemäß dem vorangehenden Anspruch, wobei
die erste Temperaturdifferenz und/oder die zweite Temperaturdifferenz im Bereich zwischen 10K und 80K, insbesondere im Bereich zwischen 20K und 60K und weiter insbesondere im Bereich zwischen 30 und 50K liegt bzw. liegen.

12. Anordnung (785) gemäß einem der zwei vorangehenden Ansprüche, wobei
die beiden Kunststoffmaterialien gleich sind.

13. Anordnung (785) gemäß einem der drei vorangehenden Ansprüche, ferner aufweisend

ein drittes inneres Objekt (780), welches ein drittes Kunststoffmaterial aufweist, das eine dritte Schmelztemperatur hat, wobei das zweite äußere Objekt (770) auch das dritte innere Objekt (780) zumindest teilweise umgibt und wobei
sich das Aufheizmittel (100) auch zwischen dem dritten inneren Objekt (780) und dem zweiten äußeren Objekt (770) befindet; wobei insbesondere
das erste innere Objekt ein Kunststoffrohr (760) ist,
das dritte innere Objekt ein weiteres Kunststoffrohr (780) ist und
das zweite äußere Objekt eine Kunststoffmuffe (770) ist, welche zwei einander zugewandte Enden, ein Ende des Kunststoffrohres (760) und ein weiteres Ende des weiteren Kunststoffrohres (780) umschließt.

14. System (890) aufweisend

eine Anordnung (785) gemäß einem der drei vorangehenden Ansprüche und
einen Generator (895) zum Erzeugen eines elektromagnetischen Feldes, welches eine Primärspule (897) des Generators (895) induktiv mit dem Aufheizmittel (100) koppelt.

15. Verfahren zum thermischen Verbinden zweier jeweils ein Kunststoffmaterial aufweisenden Objekte (760, 770), das Verfahren aufweisend

Anlegen eines Aufheizmittels (100, 200, 300, 400, 500, 600, 700, 900) gemäß einem der Ansprüche 1 bis 9 an ein erstes inneres Objekt (760) oder an ein zweites äußeres Objekt (770);
Anordnen des zweiten äußeren Objekts (770) relativ zu dem ersten inneren Objekt (760), so dass das erste innere Objekt (760) zumindest teilweise von dem zweiten äußeren Objekt (770) umgeben ist und sich das Aufheizmittel (100, 200, 300, 400, 500, 600, 700, 900) zwischen dem ersten inneren Objekt (760) und dem zweiten äußeren Objekt (770) befindet;
induktives Erhitzen des Aufheizmittels (100, 200, 300, 400, 500, 600, 700, 900), so dass Kunststoffmaterial des ersten inneren Objekts (760) und/oder Kunststoffmaterial des zweiten äußeren Objekts (770) aufschmilzt;
Eindringen von aufgeschmolzenem Kunststoffmaterial des ersten inneren Objekts (760) und/oder von aufgeschmolzenem Kunststoffmaterial des zweiten äußeren Objekts (770) in die Öffnungen (110), so dass die beiden Kunststoffmaterialien miteinander in Kontakt kommen, und/oder Aufschmelzen von Kunststoffmaterial, welches sich bereits in den Öffnungen (110) befindet;

Reduzieren einer auf das Aufheizmittel (100, 200, 300, 400, 500, 600, 700, 900) induktiv übertragenen Leistung infolge einer Annäherung der Temperatur des ferromagnetischen Materials an eine Curie-Temperatur des ferromagnetischen Materials; und

Abkühlen des aufgeschmolzenen Kunststoffmaterials des ersten inneren Objekts (760) und/oder des aufgeschmolzenen Kunststoffmaterials des zweiten äußeren Objekts (770) und/oder des sich in den Öffnungen (110) befindlichen Kunststoffmaterials, so dass die beiden Objekte (760, 770) mechanisch miteinander verbunden sind.

## Claims

1. Heating means (100, 200, 300, 400, 500, 600, 700, 900) for thermally bonding two objects (760, 770) each comprising a plastic material, wherein upon bonding a first inner object (760) is at least partially surrounded by a second outer object (770) and the heating means is located between the first inner object (760) and the second outer object (770), the heating means (100, 200, 300, 400, 500, 600, 700, 900) comprising

   a band-like structure (102) in which a plurality of openings (110, 610) are formed, and
   wherein the openings (110, 610) are sized to allow molten plastic material of the first inner object (760) and/or the second outer object (770) to penetrate and bond with molten plastic material of the other object (760, 770), and/or
   wherein the openings (110, 660) are filled with a plastic material which can bond with molten plastic material of the first inner object (760) and/or the second outer object (770); wherein
   the band-like structure (102) comprises a ferromagnetic material (305) which is inductively heatable and which has a Curie temperature lower than 460°C; **characterized in that**
   the heating means (100, 200, 300, 400, 500, 600, 700, 900) further comprises an adhesive force modifying layer (320) attached to or formed on at least one surface of the band-like structure (102).

2. Heating means (100, 200, 300, 400, 500, 600, 700, 900) according to the preceding claim, wherein

   the ferromagnetic material has a Curie temperature lower than 400°C, in particular lower than 300°C and further in particular lower than 250°C; and/or wherein
   the band-like structure (102) comprises a plurality of ferromagnetic materials having different Curie temperatures.

3. Heating means (200) according to one of the preceding claims, wherein

   the band-like structure (102) comprises a layered structure (206, 207) of different materials, which in particular have a different hardness, a different elasticity and/or a different ductility; and/or wherein
   the band-like structure (102) is configured to form a closed band-like structure (102) that is electrically conductive throughout.

4. Heating means (400) according to one of the preceding claims, wherein

   the adhesion modifying layer
   has an adhesive force enhancing layer (422) on the surface of the band-like structure (102) and/or
   has an adhesive force reducing layer (424) on the side walls of the openings (110).

5. Heating means (300) according to one of the preceding claims, wherein
   the adhesive force modifying layer is an oxide layer (320) and/or comprises carbonates.

6. Heating means (100, 200, 300, 400, 500, 600, 700, 900) according to one of the preceding claims, wherein
   the openings have an average distance s from each other which, with respect to a thickness d of the band-like structure (102), satisfies at least one of the following equations:

   $$0.5 < s/d < 2; \quad 0.7 < s/d < 1.5; \quad 0.8 < s/d < 1.3; \quad 0.9 < s/d < 1.1.$$

7. Heating means (500) according to one of the preceding claims, wherein

a transition between the planar surface of the band-like structure (102) and an opening (110) is rounded; and/or wherein
at least some of the openings (610) each have a longitudinal axis (610a) forming a non-zero angle with a surface normal (600a) of the surface of the band-like structure (102).

8. Heating means (700) according to one of the preceding claims, further comprising
at least one further band-like structure (750, 752, 754) arranged adjacent to the band-like structure (102), wherein the further band-like structure (750, 752, 754) is oriented at least approximately parallel to the band-like structure (102).

9. Heating means (100, 200, 300, 400, 500, 600, 700, 900) according to one of the preceding claims,
wherein the band-like structure (102) has a surface with elevations and depressions, wherein an average height difference between the elevations and the depressions is in the range between 0.01mm and 2mm, in particular in the range between 0.1mm and 1.5mm and further in particular in the range between 0.5mm and 1.2mm.

10. Arrangement (785) comprising

   a first inner object (760) comprising a first plastic material having a first melting temperature;
   a second outer object (770) at least partially surrounding the first inner object (760) and comprising a second plastic material having a second melting temperature; and
   a heating means (700) located between the first inner object (760) and the second outer object (770), the heating means (700) comprising a band-like structure (102) and an adhesive force modifying layer (320) attached to or formed on at least one surface of the band-like structure (102), wherein

   - the band-like structure (102) has a ferromagnetic material that is inductively heatable and has a predetermined Curie temperature that is higher than the first melting temperature and/or the second melting temperature
   - a plurality of openings (110) are formed in the band-like structure, in which a solidified plastic material connecting the first inner object (760) to the second outer object (760) is located, and
   - a first temperature difference between the predetermined Curie temperature and the first melting temperature and/or a second temperature difference between the predetermined Curie temperature and the second melting temperature is in the range between 5K and 100K.

11. Arrangement (785) according to the preceding claim, wherein
the first temperature difference and/or the second temperature difference is/are in the range between 10K and 80K, in particular in the range between 20K and 60K and further in particular in the range between 30 and 50K.

12. Arrangement (785) according to one of the two preceding claims, wherein
the two plastic materials are the same.

13. Arrangement (785) according to one of the three preceding claims, further comprising

   a third inner object (780) having a third plastic material having a third melting temperature, wherein the second outer object (770) also at least partially surrounds the third inner object (780), and wherein
   the heating means (100) is also located between the third inner object (780) and the second outer object (770); wherein in particular
   the first inner object is a plastic pipe (760) ,
   the third inner object is another plastic pipe (780), and
   the second outer object is a plastic sleeve (770) enclosing two facing ends, one end of the plastic pipe (760) and another end of the further plastic pipe (780) .

14. System (890) comprising

   an assembly (785) according to one of the three preceding claims, and
   a generator (895) for generating an electromagnetic field that inductively couples a primary coil (897) of the generator (895) to the heating means (100) .

15. Method for thermally bonding two objects (760, 770) each comprising a plastic material, the method comprising

Applying a heating means (100, 200, 300, 400, 500, 600, 700, 900) according to one of claims 1 to 9 to a first inner object (760) or to a second outer object (770) ;

Arranging the second outer object (770) relative to the first inner object (760) such that the first inner object (760) is at least partially surrounded by the second outer object (770) and the heating means (100, 200, 300, 400, 500, 600, 700, 900) is located between the first inner object (760) and the second outer object (770);

inductively heating the heating means (100, 200, 300, 400, 500, 600, 700, 900) so that plastic material of the first inner object (760) and/or plastic material of the second outer object (770) melts;

Penetrating molten plastic material of the first inner object (760) and/or molten plastic material of the second outer object (770) into the openings (110) so that the two plastic materials come into contact with each other, and/or melting plastic material that is already in the openings (110);

Reducing a power inductively transferred to the heating means (100, 200, 300, 400, 500, 600, 700, 900) due to an approach of the temperature of the ferromagnetic material to a Curie temperature of the ferromagnetic material; and

Cooling the molten plastic material of the first inner object (760) and/or the molten plastic material of the second outer object (770) and/or the plastic material located in the openings (110) so that the two objects (760, 770) are mechanically bonded together.

**Revendications**

1. Moyen de chauffage (100, 200, 300, 400, 500, 600, 700, 900) pour coller thermiquement deux objets (760, 770) comprenant chacun une matière plastique, dans lequel, lors du collage, un premier objet intérieur (760) est au moins partiellement entouré par un second objet extérieur (770) et le moyen de chauffage est situé entre le premier objet intérieur (760) et le second objet extérieur (770), le moyen de chauffage (100, 200, 300, 400, 500, 600, 700, 900) comprenant

   une structure en forme de bande (102) dans laquelle plusieurs ouvertures (110, 610) sont formées, et
   dans lequel les ouvertures (110, 610) sont dimensionnées pour permettre à la matière plastique fondue du premier objet intérieur (760) et/ou du second objet extérieur (770) de pénétrer et de se lier à la matière plastique fondue de l'autre objet (760, 770), et/ou
   dans lequel les ouvertures (110, 660) sont remplies d'une matière plastique qui peut se lier à la matière plastique fondue du premier objet intérieur (760) et/ou du second objet extérieur (770) ; dans lequel
   la structure en forme de bande (102) comprend un matériau ferromagnétique (305) qui peut être chauffé par induction et dont la température de Curie est inférieure à 460°C ; **caractérisé en ce que**
   le moyen de chauffage (100, 200, 300, 400, 500, 600, 700, 900) comprend en outre une couche de modification de force adhésive (320) fixée ou formée sur au moins une surface de la structure en forme de bande (102).

2. Moyen de chauffage (100, 200, 300, 400, 500, 600, 700, 900) selon la revendication précédente, dans lequel

   le matériau ferromagnétique a une température de Curie inférieure à 400°C, en particulier inférieure à 300°C et en particulier inférieure à 250°C ; et/ou dans lequel
   la structure en forme de bande (102) comprend plusieurs matériaux ferromagnétiques ayant des températures de Curie différentes.

3. Moyen de chauffage (200) selon l'une des revendications précédentes, dans lequel
   la structure en forme de bande (102) comprend une structure en couches (206, 207) de différents matériaux, qui ont notamment une dureté, une élasticité et/ou une ductilité différentes ; et/ou dans lequel la structure en bande (102) est configurée pour former une structure en bande fermée (102) qui est électriquement conductrice dans son ensemble.

4. Moyen de chauffage (400) selon l'une des revendications précédentes, dans lequel

   la couche de modification d'adhésion
   possède une couche d'augmentation de force d'adhésion (422) sur la surface de la structure en forme de bande (102) et/ou
   possède une couche de réduction de force d'adhésion (424) sur les parois latérales des ouvertures (110).

5. Moyen de chauffage (300) selon l'une des revendications précédentes, dans lequel

la couche de modification de force d'adhésion est une couche d'oxyde (320) et/ou comprend des carbonates.

**6.** Moyen de chauffage (100, 200, 300, 400, 500, 600, 700, 900) selon l'une des revendications précédentes, dans lequel les ouvertures ont une distance moyenne s les unes des autres qui, par rapport à une épaisseur d de la structure en forme de bande (102), satisfait au moins l'une des équations suivantes :

$$0,5 < s/d < 2 \ ; \ 0,7 < s/d < 1,5 \ ; \ 0,8 < s/d < 1,3 \ ; \ 0,9 < s/d < 1,1.$$

**7.** Moyen de chauffage (500) selon l'une des revendications précédentes, dans lequel

une transition entre la surface plane de la structure en forme de bande (102) et une ouverture (110) est arrondie ; et/ou dans lequel
au moins certaines des ouvertures (610) ont chacune un axe longitudinal (610a) formant un angle non nul avec une normale de surface (600a) de la surface de la structure en forme de bande (102).

**8.** Moyen de chauffage (700) selon l'une des revendications précédentes, comprenant en outre
au moins une autre structure en forme de bande (750, 752, 754) disposée à côté de la structure en forme de bande (102), dans lequel l'autre structure en forme de bande (750, 752, 754) est orientée au moins approximativement parallèlement à la structure en forme de bande (102).

**9.** Moyen de chauffage (100, 200, 300, 400, 500, 600, 700, 900) selon l'une des revendications précédentes, dans lequel la structure en forme de bande (102) a une surface avec des élévations et des dépressions, dans lequel une différence de hauteur moyenne entre les élévations et les dépressions est comprise entre 0,01 mm et 2 mm, en particulier entre 0,1 mm et 1,5 mm et en particulier entre 0,5 mm et 1,2 mm.

**10.** Agencement (785) comprenant

un premier objet intérieur (760) comprenant une première matière plastique ayant une première température de fusion ;
un sécond objet extérieur (770) entourant au moins partiellement le premier objet intérieur (760) et comprenant une deuxième matière plastique ayant une deuxième température de fusion ; et
un moyen de chauffage (700) situé entre le premier objet intérieur (760) et le second objet extérieur (770), le moyen de chauffage (700) comprenant une structure en forme de bande (102) et une couche de modification de force adhésive (320) attachée ou formée sur au moins une surface de la structure en forme de bande (102), dans lequel

- la structure en forme de bande (102) comporte un matériau ferromagnétique qui peut être chauffé par induction et dont la température de Curie prédéterminée est supérieure à la première température de fusion et/ou à la deuxième température de fusion
- plusieurs ouvertures (110) sont formées dans la structure en forme de bande, dans lesquelles se trouve un matériau plastique solidifié reliant le premier objet intérieur (760) au second objet extérieur (760), et
- une première différence de température entre la température de Curie prédéterminée et la première température de fusion et/ou une seconde différence de température entre la température de Curie prédéterminée et la seconde température de fusion est comprise entre 5K et 100K.

**11.** Agencement (785) selon la revendication précédente, dans lequel
la première différence de température et/ou la deuxième différence de température est/sont comprise(s) entre 10K et 80K, en particulier entre 20K et 60K et encore en particulier entre 30 et 50K.

**12.** Agencement (785) selon l'une des deux revendications précédentes, dans lequel
les deux matières plastiques sont les mêmes.

**13.** Agencement (785) selon l'une des trois revendications précédentes, comprenant en outre

un troisième objet intérieur (780) comportant une troisième matière plastique ayant une troisième température de fusion, dans lequel le deuxième objet extérieur (770) entoure également au moins partiellement le troisième objet intérieur (780), et dans lequel

le moyen de chauffage (100) est également situé entre le troisième objet intérieur (780) et le deuxième objet extérieur (770) ; dans lequel en particulier

le premier objet intérieur est un tuyau en plastique (760),

le troisième objet intérieur est un autre tuyau en plastique (780), et

le deuxième objet extérieur est un manchon en plastique (770) renfermant deux extrémités face à face, une extrémité du tuyau en plastique (760) et une autre extrémité de l'autre tuyau en plastique (780).

**14.** Système (890) comprenant

un ensemble (785) selon l'une des trois revendications précédentes, et

un générateur (895) pour générer un champ électromagnétique qui couple par induction une bobine primaire (897) du générateur (895) au moyen de chauffage (100) .

**15.** Procédé de collage thermique de deux objets (760, 770) constitués chacun d'une matière plastique, consistant à

Appliquer un moyen de chauffage (100, 200, 300, 400, 500, 600, 700, 900) selon l'une des revendications 1 à 9 à un premier objet intérieur (760) ou à un second objet extérieur (770) ;

Disposer le second objet extérieur (770) par rapport au premier objet intérieur (760) de sorte que le premier objet intérieur (760) soit au moins partiellement entouré par le second objet extérieur (770) et que le moyen de chauffage (100, 200, 300, 400, 500, 600, 700, 900) soit situé entre le premier objet intérieur (760) et le second objet extérieur (770) ;

Chauffer par induction le moyen de chauffage (100, 200, 300, 400, 500, 600, 700, 900) de manière à faire fondre la matière plastique du premier objet intérieur (760) et/ou la matière plastique du second objet extérieur (770) ;

Faire pénétrer la matière plastique fondue du premier objet intérieur (760) et/ou la matière plastique fondue du second objet extérieur (770) dans les ouvertures (110) de manière à ce que les deux matières plastiques entrent en contact l'une avec l'autre, et/ou faire fondre la matière plastique qui se trouve déjà dans les ouvertures (110) ;

Réduire une puissance transférée par induction aux moyens de chauffage (100, 200, 300, 400, 500, 600, 700, 900) en raison de l'approche de la température du matériau ferromagnétique à une température de Curie du matériau ferromagnétique ; et

Refroidir la matière plastique fondue du premier objet intérieur (760) et/ou la matière plastique fondue du second objet extérieur (770) et/ou la matière plastique située dans les ouvertures (110) de sorte que les deux objets (760, 770) soient mécaniquement collés l'un à l'autre.

100

L

B

110    102

# Fig. 1a

L

B

110    102

# Fig. 1b

200                                                            207

D

206

L

# Fig. 2

300                                                    320

102, 305

# Fig. 3

400

422 — 424

102, 305

110

422

422

424

102, 305

102, 305

422

**Fig. 4**

500

530

102, 305

110

R

102, 305

**Fig. 5**

600

610a

600a

102, 305

610

102, 305

**Fig. 6**

**Fig. 7**

**Fig. 8**

**Fig. 9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2452805 A1
- US 5756973 A
- JP S63308080 A
- JP H09188859 A
- US 2739829 A
- FR 2748415 A1
- WO 9215182 A1
- JP H1047580 A
- DE 102006059337 A1